# EUROPÄISCHE PATENTSCHRIFT

(11) **EP 3 080 214 B1**
(45) Veröffentlichungstag und Bekanntmachung des Hinweises auf die Patenterteilung: **15.08.2018**
(21) Anmeldenummer: 13818691.1
(22) Anmeldetag: 10.12.2013
(51) Int. Cl.: C09D 5/44, C25D 13/12, C25D 13/18, C25D 13/20

(54) **WÄSSRIGE BESCHICHTUNGSZUSAMMENSETZUNG ZUR TAUCHLACK-BESCHICHTUNG ELEKTRISCH LEITFÄHIGER SUBSTRATE ENTHALTEND BISMUT UND EINE PHOSPHORHALTIGE AMIN-BLOCKIERTE VERBINDUNG**
AQUEOUS COATING COMPOSITION FOR DIP COATING OF ELECTRICALLY CONDUCTIVE SUBSTRATES CONTAINING BISMUTH AND A PHOSPHORUS-CONTAINING AMINE-BLOCKED COMPOUND
COMPOSITION AQUEUSE DE REVÊTEMENT POUR LE REVÊTEMENT DE LAQUAGE PAR TREMPAGE DE SUBSTRATS ÉLECTROCONDUCTEURS, CONTENANT DU BISMUTH ET UN COMPOSÉ PHOSPHORÉ BLOQUÉ PAR UNE AMINE

(43) Veröffentlichungstag der Anmeldung: 19.10.2016
(73) Patentinhaber: BASF Coatings GmbH, 48165 Münster (DE); Henkel AG & Co. KGaA, 40589 Düsseldorf (DE)
(72) Erfinder: HOLTSCHULTE, Sabine, 59387 Ascheberg (DE); NIEGEMEIER, Andreas, 40235 Düsseldorf (DE); STOLL, Dominik, 48167 Münster (DE)
(74) Vertreter: BASF IP Association
(86) Internationale Anmeldenummer: PCT/EP2013/076037
(87) Internationale Veröffentlichungsnummer: WO 2015/086042

(56) Entgegenhaltungen:
- EP-A1- 1 342 757
- EP-A1- 2 405 035
- WO-A1-2010/077901
- WO-A1-2011/029502
- DE-A1- 2 658 812

## Beschreibung

Die vorliegende Erfindung betrifft eine wässrige Beschichtungszusammensetzung (A) umfassend wenigstens ein kathodisch abscheidbares Bindemittel (A1) und gegebenenfalls wenigstens ein Vernetzungsmittel (A2) zur zumindest teilweisen Beschichtung eines elektrisch leitfähigen Substrats mit einem Elektrotauchlack, wobei (A) eine Gesamtmenge von wenigstens 30 ppm Bismut, bezogen auf das Gesamtgewicht von (A) und zudem wenigstens eine phosphorhaltige Verbindung (P) enthält, welche mit wenigstens einem Amin der allgemeinen Formel (I) blockiert ist, die Verwendung von (A) zur zumindest teilweisen Beschichtung eines elektrisch leitfähigen Substrats mit einem Elektrotauchlack, ein entsprechendes Beschichtungsverfahren und ein gemäß diesem Verfahren erhältliches zumindest teilweise beschichtetes Substrat.

Im Automobilbereich müssen die zur Herstellung eingesetzten metallischen Bauteile üblicherweise gegen Korrosion geschützt werden. Die Anforderungen an den zu erzielenden Korrosionsschutz sind sehr hoch, insbesondere da seitens der Hersteller oftmals über viele Jahre eine Garantie gegen Durchrostung gewährt wird. Solch ein Korrosionsschutz wird üblicherweise durch eine Beschichtung der Bauteile oder der zu ihrer Herstellung eingesetzten Substrate mit wenigstens einer dafür geeigneten Beschichtung erzielt.

Nachteilig an den bekannten Beschichtungsverfahren, insbesondere an den bekannten in der Automobilindustrie eingesetzten Verfahren, ist, dass diese Verfahren üblicherweise einen Phosphatierungsschritt als Vorbehandlung vorsehen, in dem das zu beschichtende Substrat nach einem optionalen Reinigungsschritt und vor einem Tauchlackierungsschritt mit einem Metallphosphat wie Zinkphosphat in einem Phosphatierungsschritt behandelt wird, um einen ausreichenden Korrosionsschutz zu gewährleisten. Diese Vorbehandlung beinhaltet üblicherweise die Durchführung mehrerer Verfahrensschritte in mehreren verschiedenen und unterschiedlich beheizten Tauchbecken. Zudem fallen bei der Durchführung einer solchen Vorbehandlung Abfallschlämme an, die die Umwelt belasten und entsorgt werden müssen. Es ist daher insbesondere aus ökonomischen und ökologischen Gründen wünschenswert, einen solchen Vorbehandlungsschritt einsparen zu können, aber dennoch zumindest die gleiche Korrosionsschutzwirkung zu erzielen, die mit den bekannten Verfahren erzielt wird.

Kathodisch abscheidbare Bismut-haltige Beschichtungszusammensetzungen, die in einem einstufigen Beschichtungsschritt auf ein geeignetes Substrat abgeschieden werden können, sind beispielsweise aus WO 2009/021719 A2, WO 2004/018580 A1, WO 2004/018570 A2, EP 0 642 558 B2 sowie WO 95/07319 A1 bekannt. Die jeweils eingesetzte Bismut-Verbindung fungiert dabei üblicherweise als Vernetzungskatalysator. Nachteilig an den darin offenbarten Beschichtungszusammensetzungen ist jedoch, dass die so erhaltenen beschichteten Substrate oftmals keinen ausreichenden Korrosionsschutz aufweisen. Kathodisch abscheidbare Bismut-haltige Beschichtungszusammensetzungen sind zudem aus EP 1 342 757 A1 und EP 2 405 035 A1 bekannt. Kathodisch abscheidbare Beschichtungszusammensetzungen werden zudem in WO 2010/077901 A1 offenbart.

Als Klarlack oder Decklack einsetzbare Beschichtungszusammensetzungen, die einen phosphorhaltigen mit einem Amin blockierten Katalysator enthalten, sind beispielsweise aus WO 2011/029502 A1, WO 2010/063332 A1, US 2009/0087667 A1, US 2008/0268256 A1 und JP 2012-000568 A bekannt. Entsprechend ausgehärtete Beschichtungszusammensetzungen zeichnen sich beispielsweise durch eine gute Kratzbeständigkeit aus. Der Einsatz dieser Katalysatoren in Elektrotauchlackierungen und dementsprechend irgendein auf die Gegenwart dieser Katalysatoren in diesen Lackierungen zurückzuführender verbesserter Korrosionsschutz von entsprechend lackierten Substraten wird in keinem dieser Dokumente beschrieben.

Aus DE 26 58 812 A1 sind kathodisch abscheidbare Elektrotauchlacke bekannt, die als Vernetzungskatalysator einen Phosphorsäureester mindestens eines Phenols enthalten. Nachteilig an den darin offenbarten Beschichtungszusammensetzungen ist jedoch, dass die so erhaltenen beschichteten Substrate oftmals keinen ausreichenden Korrosionsschutz aufweisen.

Es besteht ein Bedarf an elektrophoretisch abscheidbaren Beschichtungszusammensetzungen zur zumindest teilweisen Beschichtung von elektrisch leitfähigen Substraten mit einem Elektrotauchlack, welche - insbesondere im Hinblick auf eine Einsparung des üblicherweise durchgeführten Phosphatierungsschritts als Vorbehandlung - eine ökonomischeres und ökologischeres Beschichtungsverfahren als herkömmliche eingesetzte Beschichtungszusammensetzungen ermöglichen, aber dennoch zumindest in gleichem Maße dazu geeignet ist, die hierfür erforderliche Korrosionsschutzwirkung zu erzielen.

Eine Aufgabe der vorliegenden Erfindung ist es daher, eine Beschichtungszusammensetzung zur zumindest teilweisen Beschichtung eines elektrisch leitfähigen Substrats zur Verfügung zu stellen, welche gegenüber den aus dem Stand der Technik bekannten Beschichtungszusammensetzungen Vorteile aufweist. Insbesondere ist es eine Aufgabe der vorliegenden Erfindung, solche Beschichtungszusammensetzungen zur Verfügung zu stellen, die ein ökonomischeres und/oder ökologischeres Beschichtungsverfahren als herkömmliche eingesetzte Beschichtungszusammensetzungen ermöglichen. Insbesondere ist es zudem eine Aufgabe der vorliegenden Erfindung, ein solches Verfahren bereitzustellen, welches eine ökonomischere und/oder ökologischere Beschichtung als herkömmliche Beschichtungsverfahren ermöglicht, d.h. welches es insbesondere ermöglicht, auf die üblicherweise noch vor einer Tauchlackierung mittels eines Metallphosphats durchzuführende Phosphatierung zu verzichten, aber mit welchem dennoch die zumindest gleiche - und insbesondere eine verbesserte - Korrosionsschutzwirkung erzielt werden kann, die mit den üblichen Verfahren erzielt wird.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher eine wässrige Beschichtungszusammensetzung (A) umfassend
(A1) wenigstens ein kathodisch abscheidbares Bindemittel und
(A2) gegebenenfalls wenigstens ein Vernetzungsmittel,
zur zumindest teilweisen Beschichtung eines elektrisch leitfähigen Substrats mit einem Elektrotauchlack, dadurch gekennzeichnet, dass
die Beschichtungszusammensetzung (A) eine Gesamtmenge von wenigstens 30 ppm Bismut, bezogen auf das Gesamtgewicht der Beschichtungszusammensetzung (A), enthält, und dass
die Beschichtungszusammensetzung (A) wenigstens eine phosphorhaltige Verbindung (P) enthält, welche mit wenigstens einem Amin der allgemeinen Formel (I) blockiert ist, 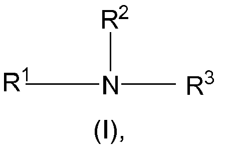 in der
R¹ und R² jeweils unabhängig voneinander für einen C₁₋₁₈-aliphatischen Rest, für einen C₃₋₁₂-cycloaliphatischen Rest, für einen über eine C₁₋₁₀-aliphatische Gruppe verbrückten C₃₋₁₂-cycloaliphatischen Rest oder für einen über eine C₁₋₁₀-aliphatische Gruppe verbrückten Aryl- oder Heteroaryl-Rest stehen, und
R³ für H, einen C₁₋₁₈-aliphatischen Rest, einen C₃₋₁₂-cycloaliphatischen Rest, einen über eine C₁₋₁₀-aliphatische Gruppe verbrückten C₃₋₁₂-cycloaliphatischen Rest oder für einen über eine C₁₋₁₀-aliphatische Gruppe verbrückten Aryl- oder Heteroaryl-Rest steht.

Die erfindungsgemäße wässrige Beschichtungszusammensetzung (A) dient somit zur Herstellung einer Elektrotauchlackschicht auf einer Substratoberfläche eines elektrisch leitfähigen Substrats.

Es wurde überraschend gefunden, dass es die erfindungsgemäße wässrige Beschichtungszusammensetzung (A), insbesondere wenn diese in einem Verfahren zur zumindest teilweisen Beschichtung eines elektrisch leitfähigen Substrats mit einem Elektrotauchlack eingesetzt wird, ermöglicht, auf den üblicherweise vor der Tauchlackierung, insbesondere Elektrotauchlackierung, durchzuführenden erforderlichen Schritt einer Vorbehandlung des zumindest teilweise zu beschichtenden elektrisch leitfähigen Substrats mit einem Metallphosphat wie Zinkphosphat zur Ausbildung einer Metallphosphatschicht auf dem Substrat verzichten zu können, wodurch das entsprechende Beschichtungsverfahren damit insgesamt sowohl ökonomischer, insbesondere weniger zeit- und kosten-intensiv, als auch ökologischer als herkömmliche Verfahren gestaltet werden kann.

Insbesondere wurde überraschend gefunden, dass es die erfindungsgemäße Beschichtungszusammensetzung (A) ermöglicht, zumindest teilweise mit einem Elektrotauchlack beschichtete elektrisch leitfähige Substrate, zur Verfügung zu stellen, die im Vergleich zu mittels herkömmlicher Verfahren entsprechend beschichteter Substrate hinsichtlich ihrer Korrosionsschutzwirkung zumindest keine Nachteile und insbesondere Vorteile aufweisen, insbesondere wenn als Substrat Aluminium eingesetzt wird, das insbesondere keiner Vorbehandlung wie einer Phosphatierung unterworfen worden ist.

Es wurde ferner überraschend gefunden, dass ein Verfahren zur zumindest teilweisen Beschichtung eines elektrisch leitfähigen Substrate, bei dem die erfindungsgemäße Beschichtungszusammensetzung eingesetzt wird, es ermöglicht, insbesondere durch einen zweistufigen Schritt (1) und innerhalb dieses Schritts (1) durch die Stufe (1a), eine signifikante Beschichtung des Substrats mit Bi, insbesondere von mindestens 10 mg/m² Bi, zu erzielen. Der Gehalt an Bismut kann dabei mittels der nachstehend beschriebenen Methode durch Röntgenfluoreszenzanalyse ermittelt werden. Durch die in (A) enthaltene Amin-blockierte phosphorhaltige Verbindung (P) kann der Korrosionsschutz überraschenderweise weiter verbessert werden.

Der Begriff "umfassend" im Sinne der vorliegenden Erfindung, beispielsweise in Zusammenhang mit der erfindungsgemäßen wässrigen Beschichtungszusammensetzung (A), hat in einer bevorzugten Ausführungsform die Bedeutung "bestehend aus". Dabei können hinsichtlich der erfindungsgemäßen Beschichtungszusammensetzung (A) in dieser bevorzugten Ausführungsform eine oder mehrere der weiteren nachstehend genannten optional in der erfindungsgemäß eingesetzten Beschichtungszusammensetzung (A) enthaltenen Komponenten in der Beschichtungszusammensetzung (A) enthalten sein wie - neben (A1), Bismut, insbesondere in Form von (A3) und/oder (A4) und mit wenigstens einem Amin-blockierte Verbindung (P) und Wasser sowie gegebenenfalls (A2) zum Beispiel die optionalen Komponenten (A5), (A6) und/oder (A7) und/oder (A8) sowie gegebenenfalls vorhandene organische Lösemittel. Alle Komponenten können dabei jeweils in ihren vorstehend und nachstehend genannten bevorzugten Ausführungsformen in der erfindungsgemäß eingesetzten Beschichtungszusammensetzung (A) enthalten sein.

### Substrat

Als erfindungsgemäß eingesetztes elektrisch leitfähiges Substrat eignen sich alle üblicherweise eingesetzten und dem Fachmann bekannten elektrisch leitfähigen Substrate. Vorzugsweise sind die erfindungsgemäß eingesetzten elektrisch leitfähigen Substrate ausgewählt aus der Gruppe bestehend aus Stahl, vorzugsweise Stahl ausgewählt aus der Gruppe bestehend aus kalt gewalztem Stahl, verzinktem Stahl wie tauchverzinktem Stahl, legierungsverzinktem Stahl (wie beispielsweise Galvalume, Galvannealed oder Galfan) und aluminiertem Stahl, Aluminium und Magnesium, insbesondere eignen sich verzinkter Stahl und Aluminium. Ganz besonders bevorzugt ist ein Substrat aus Aluminium oder ein Substrat, welches wenigstens eine Oberfläche aus Aluminium aufweist. Zudem eignen sich als Substrate warmgewalzter Stahl, hochfester Stahl, Zn/Mg-Legierungen und Zn/Ni-Legierungen. Als Substrate eignen sich insbesondere Teile von Karosserien oder vollständige Karosserien von zu produzierenden Automobilen. Das erfindungsgemäße Verfahren kann auch zur Bandbeschichtung (Coil-Coating) eingesetzt werden. Bevor das jeweilige elektrisch leitfähige Substrat eingesetzt wird, erfolgt vorzugsweise eine Reinigung und/oder Entfettung des Substrats.

Das erfindungsgemäß eingesetzte elektrisch leitfähige Substrat kann ein mit wenigstens einem Metallphosphat vorbehandeltes Substrat sein. Das erfindungsgemäß eingesetzte elektrisch leitfähige Substrat kann zudem ein chromatiertes Substrat sein. Eine solche Vorbehandlung mittels einer Phosphatierung oder Chromatierung, die üblicherweise nach Reinigung des Substrats und vor der Tauchlackierung des Substrats erfolgt, ist insbesondere ein in der Automobilindustrie üblicher Vorbehandlungsschritt. Es ist in diesem Zusammenhang insbesondere wünschenswert, dass eine optional durchgeführte Vorbehandlung unter ökologischen und/oder ökonomischen Gesichtspunkte vorteilhaft ausgestaltet ist. Beispielsweise ist daher ein optionaler Vorbehandlungsschritt möglich, in dem anstelle einer üblichen Trikation-Phosphatierung auf die Nickel-Komponente verzichtet wird und stattdessen eine Dikation-Phosphatierung (enthaltend Zink- und Mangan-Kationen und keine Nickel-Kationen) des erfindungsgemäß eingesetzten elektrisch leitfähigen Substrat noch vor einer Beschichtung mit der wässrigen Beschichtungszusammensetzung (A) durchgeführt wird.

Es ist jedoch gerade eine Aufgabe der vorliegenden Erfindung, dass auf eine solche Vorbehandlung des zumindest teilweise zu beschichtenden elektrisch leitfähigen Substrats mittels Phosphatierung mit einem Metallphosphat wie beispielsweise Zinkphosphat oder mittels einer Chromatierung verzichtet werden kann. In einer bevorzugten Ausführungsform ist das erfindungsgemäß eingesetzte elektrisch leitfähige Substrat daher kein solches phosphatiertes oder chromatiertes Substrat.

Das erfindungsgemäß eingesetzte elektrisch leitfähige Substrat kann noch vor einer Beschichtung mit der erfindungsgemäßen wässrigen Beschichtungszusammensetzung (A) mit einer wässrigen Vorbehandlungs-Zusammensetzung vorbehandelt werden, welche wenigstens eine wasserlösliche Verbindung, welche wenigstens ein Ti-Atom und/oder wenigstens ein Zr-Atom enthält, und wenigstens eine wasserlösliche Verbindung als Quelle für Fluorid-Ionen, welches wenigstens ein Fluor-Atom enthält, umfasst, oder mit einer wässrigen Vorbehandlungs-Zusammensetzung, welche eine wasserlösliche Verbindung umfasst, welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist.

Vorzugsweise weisen das wenigstens eine Ti-Atom und/oder das wenigstens eine Zr-Atom dabei die Oxidationsstufe +4 auf. Vorzugsweise enthält die wässrige Vorbehandlungs-Zusammensetzung aufgrund der in ihr enthaltenen Komponenten, vorzugsweise zudem aufgrund der entsprechend gewählten Mengenanteile dieser Komponenten einen Fluoro-Komplex wie beispielsweise ein Hexfluorometallat, d.h. insbesondere Hexafluorotitanat und/oder wenigstens ein Hexafluorozirkonat. Vorzugsweise weist die Vorbehandlungs-Zusammensetzung eine Gesamtkonzentration an den Elementen Ti und/oder Zr auf, die 2,5·10⁻⁴ mol/L nicht unterschreitet, aber nicht grösser als 2,0·10⁻² mol/L ist. Die Herstellung solcher Vorbehandlungs-Zusammensetzungen und ihr Einsatz in der Vorbehandlung elektrisch leitfähiger Substrat ist beispielsweise aus WO 2009/115504 A1 bekannt.

Vorzugsweise enthält die Vorbehandlungs-Zusammensetzung zudem Kupferionen, vorzugsweise Kupfer(II)-Ionen sowie gegebenenfalls eine oder mehrere wasserlösliche und/oder wasserdispergierbare Verbindungen, die wenigstens ein Metallion ausgewählt aus der Gruppe bestehend aus Ca, Mg, Al, B, Zn, Mn und W sowie Mischungen davon enthält, vorzugsweise wenigstens ein Alumosilikat und hierbei insbesondere ein solches, das ein atomares Verhältnis von Al zu Si-Atomen von zumindest 1:3 aufweist. Die Herstellung solcher Vorbehandlungs-Zusammensetzungen und ihr Einsatz in der Vorbehandlung elektrisch leitfähiger Substrat ist beispielsweise aus WO 2009/115504 A1 bekannt. Die Alumosilikate liegen vorzugsweise als Nanopartikel mit einer durch dynamische Lichtstreuung bestimmbaren Teilchengröße im Bereich von 1 bis 100 nm. Die durch dynamische Lichtstreuung bestimmbare mittlere Teilchengröße solcher Nanopartikel im Bereich von 1 bis 100 nm wird dabei gemäß DIN ISO 13321 (Datum: 1.10.2004) bestimmt.

In einer bevorzugten Ausführungsform ist das erfindungsgemäß eingesetzte elektrisch leitfähige Substrat jedoch ein Substrat, welches nicht mit einer solchen Vorbehandlungs-Zusammensetzung vorbehandelt worden ist.

### Komponente (A1) und optionale Komponente (A2)

Die erfindungsgemäß eingesetzte wässrige Beschichtungszusammensetzung (A) umfasst wenigstens ein kathodisch abscheidbares Bindemittel als Komponente (A1) und gegebenenfalls wenigstens ein Vernetzungsmittel als Komponente (A2).

Der Begriff "Bindemittel" als Bestandteil der Beschichtungszusammensetzung (A) umfasst im Sinne der vorliegenden Erfindung vorzugsweise die für die Filmbildung verantwortlichen kathodisch abscheidbaren polymeren Harze der erfindungsgemäß eingesetzten wässrigen Beschichtungszusammensetzung (A), wobei jedoch gegebenenfalls vorhandenes Vernetzungsmittel nicht vom Begriff des Bindemittels mit eingeschlossen ist. Vorzugsweise ist ein "Bindemittel" im Sinne der vorliegenden Erfindung daher ein polymeres Harz, wobei jedoch gegebenenfalls vorhandenes Vernetzungsmittel nicht vom Begriff des Bindemittels mit eingeschlossen ist. Insbesondere werden zudem gegebenenfalls vorhandene Pigmente und Füllstoffe nicht unter den Begriff des Bindemittels subsumiert. Vorzugsweise wird zudem die optionale Komponente (A5) nicht unter den Begriff des Bindemittels subsumiert, wenn es sich bei dieser Komponente um ein polymeres Komplexierungsmittel handelt.

Vorzugsweise wird zur Herstellung der erfindungsgemäß eingesetzten Beschichtungszusammensetzung (A) eine wässrige Dispersion oder wässrige Lösung, besonders bevorzugt wenigstens eine wässrige Dispersion, eingesetzt, die das wenigstens eine kathodisch abscheidbare Bindemittel (A1) und das gegebenenfalls vorhandene wenigstens eine Vernetzungsmittel (A2) enthält. Diese wässrige Dispersion oder Lösung enthaltend (A1) und gegebenenfalls (A2) weist vorzugsweise einen nicht-flüchtigen Anteil, d.h. einen Festkörper-Anteil, in einem Bereich von 25 bis 60 Gew-%, besonders bevorzugt in einem Bereich von 27,5 bis 55 Gew-%, ganz besonders bevorzugt in einem Bereich von 30 bis 50 Gew-%, noch bevorzugter in einem Bereich von 32,5 bis 45 Gew-%, insbesondere in einem Bereich von 35 bis 42,5 Gew-%, jeweils bezogen auf das Gesamtgewicht dieser wässrigen Dispersion oder Lösung, auf.

Bestimmungsmethoden zur Bestimmung des Festkörper-Anteils, insbesondere von Elektrotauchlackierungen, sind dem Fachmann bekannt. Vorzugsweise wird der Festkörper-Anteil gemäß DIN EN ISO 3251 (Datum: 1.6.2008) bestimmt, insbesondere über eine Dauer von 30 Minuten bei 180°C gemäß dieser Norm.

Dem Fachmann sind kathodisch abscheidbare Bindemittel (A1) bekannt. Das erfindungsgemäß eingesetzte Bindemittel ist vorzugsweise ein in Wasser lösbares oder dispergierbares Bindemittel.

Alle üblichen dem Fachmann bekannten kathodisch abscheidbaren Bindemittel eignen sich dabei als Bindemittel-Komponente (A1) der erfindungsgemäß eingesetzten wässrigen Beschichtungszusammensetzung (A).

Vorzugsweise weist das Bindemittel (A1) reaktive funktionelle Gruppen auf, die eine Vernetzungsreaktion ermöglichen. Das Bindemittel (A1) ist dabei ein selbstvernetzendes oder ein fremd-vernetzendes Bindemittel, vorzugsweise ein fremd-vernetzendes Bindemittel. Um eine Vernetzungsreaktion zu ermöglichen, enthält die Beschichtungszusammensetzung (A) daher neben dem wenigstens einen Bindemittel (A1) vorzugsweise zudem wenigstens ein Vernetzungsmittel (A2).

Das der Beschichtungszusammensetzung (A) enthaltene Bindemittel (A1) bzw. das gegebenenfalls enthaltene Vernetzungsmittel (A2) ist vorzugsweise thermisch vernetzbar. Vorzugsweise sind das Bindemittel (A1) und das gegebenenfalls enthaltene Vernetzungsmittel (A2) beim Erwärmen auf Temperaturen oberhalb Raumtemperatur, d.h. oberhalb von 18-23°C vernetzbar. Vorzugsweise sind das Bindemittel (A1) und das gegebenenfalls enthaltene Vernetzungsmittel (A2) erst bei Ofentemperaturen ≥ 80°C, bevorzugter ≥ 110°C, besonders bevorzugt ≥ 130°C und ganz besonders bevorzugt ≥ 140°C vernetzbar. Besonders vorteilhaft sind das Bindemittel (A1) und das gegebenenfalls enthaltene Vernetzungsmittel (A2) bei 100 bis 250°C, noch bevorzugter bei 125 bis 250°C und besonders bevorzugt bei 150 bis 250°C vernetzbar.

Vorzugsweise umfasst die Beschichtungszusammensetzung (A) wenigstens ein Bindemittel (A1), welches reaktive funktionelle Gruppen aufweist, die vorzugsweise in Kombination mit wenigstens einem Vernetzungsmittel (A2) eine Vernetzungsreaktion ermöglichen.

Jede übliche dem Fachmann bekannte vernetzbare reaktive funktionelle Gruppe kommt dabei in Betracht. Vorzugsweise weist das Bindemittel (A1) reaktive funktionelle Gruppen ausgewählt aus der Gruppe bestehend aus gegebenenfalls substituierten primären Amino-Gruppen, gegebenenfalls substituierten sekundären Amino-Gruppen, substituierten tertiären Amino-Gruppen, Hydroxyl-Gruppen, Thiol-Gruppen, Carboxyl-Gruppen, Gruppen, welche wenigstens eine C=C-Doppelbindung, wie beispielsweise Vinyl-Gruppen oder (Meth)acrylat-Gruppen, und Epoxid-Gruppen auf, wobei die primären und sekundären Amino-Gruppen mit 1 oder 2 oder 3 Substituenten jeweils unabhängig voneinander ausgewählt aus der Gruppe bestehend aus C₁₋₆-aliphatischen Resten wie beispielsweise Methyl, Ethyl, n-Propyl oder iso-Propyl substituiert sein können, wobei diese C₁₋₆-aliphatischen Reste wiederum gegebenenfalls mit 1, 2 oder 3 Substituenten jeweils unabhängig voneinander ausgewählt aus der Gruppe bestehend aus OH, NH₂, NH(C₁₋₆-Alkyl) und N(C₁₋₆-Alkyl)₂ substituiert sein können. Besonders bevorzugt ist wenigstens ein Bindemittel (A1), welches reaktive funktionelle Gruppen ausgewählt aus der Gruppe bestehend aus gegebenenfalls substituierten primären Amino-Gruppen, gegebenenfalls substituierten sekundären Amino-Gruppen, und Hydroxyl-Gruppen aufweist, wobei die primären und sekundären Amino-Gruppen gegebenenfalls mit 1 oder 2 oder 3 Substituenten jeweils unabhängig voneinander ausgewählt aus der Gruppe bestehend aus C₁₋₆-aliphatischen Resten wie beispielsweise Methyl, Ethyl, n-Propyl oder iso-Propyl substituiert sein können, wobei diese C₁₋₆-aliphatischen Reste wiederum gegebenenfalls mit 1, 2 oder 3 Substituenten jeweils unabhängig voneinander ausgewählt aus der Gruppe bestehend aus OH, NH₂, NH(C₁₋₆-Alkyl) und N(C₁₋₆-Alkyl)₂ substituiert sein können. Die reaktiven funktionellen Gruppen, insbesondere die gegebenenfalls substituierten primären und sekundären Amino-Gruppen, können dabei gegebenenfalls zumindest teilweise in protonierter Form vorliegen.

Besonders bevorzugt weist das Bindemittel (A1) tertiäre gegebenenfalls zumindest teilweise in protonierter Form vorliegende Amino-Gruppen auf, ganz besonders bevorzugt solche tertiären Amino-Gruppen, die jeweils unabhängig voneinander wenigstens zwei jeweils wenigstens einfach mit einer Hydroxyl-Gruppe substituierte C₁₋₃-Alkyl-Gruppen aufweisen, insbesondere die jeweils unabhängig voneinander zwei Hydroxyethyl-Gruppen, zwei Hydroxypropyl-Gruppen oder eine Hydroxylpropyl- und eine Hydroxyethyl-Gruppe aufweisen, wobei das Bindemittel (A1) vorzugsweise wenigstens ein polymeres Harz ist. Derartige Bindemittel können beispielsweise nach einem Verfahren erhalten werden, welches in JP 2011-057944 A beschrieben ist.

Vorzugsweise ist das in der Beschichtungszusammensetzung (A) enthaltene Bindemittel (A1) wenigstens ein Acrylat-basiertes polymeres Harz und/oder wenigstens ein Epoxid-basiertes polymeres Harz, insbesondere wenigstens ein kationisches Epoxid-basiertes und Amin-modifiziertes Harz. Die Herstellung solcher kationischer Amin-modifizierter Epoxid-basierter Harze ist bekannt und wird beispielsweise in DE 35 18 732, DE 35 18 770, EP 0 004 090, EP 0 012 463, EP 0 961 797 B1 und EP 0 505 445 B1 beschrieben. Unter kationischen Epoxid-basierten Amin-modifizierten Harzen werden vorzugsweise Reaktionsprodukte aus wenigstens einem gegebenenfalls modifizierten Polyepoxid, d.h. wenigstens einer gegebenenfalls modifizierten Verbindung mit zwei oder mehr Epoxid-Gruppen, und wenigstens einem vorzugsweise wasserlöslichen Amin, vorzugsweise wenigstens einem solchen primären und/oder sekundären Amin verstanden. Besonders bevorzugte Polyepoxide sind dabei aus Polyphenolen und Epihalohydrinen hergestellte Polyglycidylether von Polyphenolen. Als Polyphenole können insbesondere Bisphenol A und/oder Bisphenol F eingesetzt werden. Weitere geeignete Polyepoxide sind Polyglycidylether von mehrwertigen Alkoholen, wie z. B. Ethylenglykol, Diethylenglykol, Triethylenglykol, 1,2-Propylenglykol- 1-4-Propylenglykol, 1,5-Pentandiol, 1,2,6-Hexantriol, Glycerin und Bis-(4-hydroxycyclohexyl)2,2propan. Unter modifizierten Polyepoxiden werden solche Polyepoxide verstanden, in denen ein Teil der reaktiven funktionellen Gruppen mit wenigstens einer modifizierenden Verbindung umgesetzt worden ist. Beispiele für solche modifizierenden Verbindungen sind:
a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z. B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder
b) aminogruppenhaltige Verbindungen, wie Diethylamin oder Ethylhexylamin oder Diamine mit sekundären Aminogruppen, z. B. N,N'-Dialkylalykendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z. B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
c) hydroxylgruppenhaltige Verbindungen, wie Neopentylglykol, Bis-ethoxiliertes Neopentylglykol, Hydroxipivalinsäureneopentylglykolester, Dimethylhydantoin-N-N'-diethanol, Hexandiol-1,6, Hexandiol-2,5, 1,4-Bis- (hydroximethyl)cyclohexan, 1,1-Isopropyliden-bis-(p-phenoxy)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgeestert werden. Beispiele für einsetzbare Amine sind Mono- und Dialkylamine, wie Methylamin, Ethylamin, Propylamin, Butylamin, Dimethylamin, Diethylamin, Dipropylamin, Methylbutylamin, Alkanolamine, wie z. B. Methylethanolamin oder Diethanolamin, Dialkylaminoalkylamine, wie z. B. Dimethylaminoethylamin, Diethylaminopropylamin, oder Dimethylaminopropylamin. Die einsetzbaren Amine können auch noch andere funktionelle Gruppen enthalten, sofern diese die Umsetzung des Amins mit der Epoxidgruppe des gegebenenfalls modifizierten Polyepoxids nicht stören und auch nicht zu einer Gelierung der Reaktionsmischung führen. Bevorzugt werden sekundäre Amine eingesetzt. Die für die Wasserverdünnbarkeit und elektrische Abscheidung erforderlichen Ladungen können durch Protonierung mit wasserlöslichen Säuren (z.B. Borsäure, Ameisensäure, Essigsäure, Milchsäure, bevorzugt Essigsäure) erzeugt werden. Eine weitere Möglichkeit zur Einführung kationischer Gruppen in die das gegebenenfalls modifizierte Polyepoxid besteht in der Umsetzung von Epoxidgruppen des Polyepoxids mit Amin-Salzen.

Vorzugsweise umfasst die Beschichtungszusammensetzung (A) neben dem wenigstens einen kathodisch abscheidbaren Bindemittel (A1) wenigstens ein Vernetzungsmittel (A2), welches eine Vernetzungsreaktion mit den reaktiven funktionellen Gruppen des Bindemittels (A1) ermöglicht.

Alle dem Fachmann bekannten üblichen Vernetzungsmittel (A2) können eingesetzt werden wie beispielsweise Phenoplaste, polyfunktionelle Mannich-Basen, Melaminharze, Benzoguanamin-Harze, Epoxide, freie Polyisocyanate und/oder blockierte Polyisocyanate, insbesondere blockierte Polyisocyanate.

Ein besonders bevorzugtes Vernetzungsmittel (A2) ist ein blockiertes Polyisocyanat. Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise bei ≥ 80°C, bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°, aber reagiert.

Bei der Herstellung der blockierten Polyisocyanate können beliebige für die Vernetzung geeignete organische Polyisocyanate verwendet werden. Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethylcyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel (A2) in Betracht kommenden organischen Polyisocyanate können auch Präpolymere sein, die sich beispielsweise von einem Polyol einschliesslich eines Polyetherpolyols oder eines Polyesterpolyols ableiten. Ganz besonders bevorzugt sind 4-Toluoldiisocyanat und/oder 2,6-Toluoldiisocyanat (TDI), bzw. Isomerengemische aus 2,4-Toluoldiisocyanat und 2,6-Toluoldiisocyanat und/oder Diphenylmethandiisocyanat (MDI).

Für die Blockierung der Polyisocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Vorzugsweise liegt das relative Gewichtsverhältnis des wenigstens einen Bindemittels (A1) und des gegebenenfalls vorhandenen wenigstens einen Vernetzungsmittels (A2) in der erfindungsgemäß eingesetzten Beschichtungszusammensetzung (A) zueinander in einem Bereich von 4:1 bis 1,1:1, besonders bevorzugt in einem Bereich von 3:1 bis 1,1:1, ganz besonders bevorzugt in einem Bereich von 2,5:1 bis 1,1:1, insbesondere in einem Bereich von 2,1:1 bis 1,1:1, jeweils bezogen auf den Festkörper-Anteil des wenigstens einen Bindemittels (A1) und des wenigstens einen Vernetzungsmittel (A2) in der Beschichtungszusammensetzung (A).

In einer anderen bevorzugten Ausführungsform liegt das relative Gewichtsverhältnis des wenigstens einen Bindemittels (A1) und des gegebenenfalls vorhandenen wenigstens einen Vernetzungsmittels (A2) in der erfindungsgemäß eingesetzten Beschichtungszusammensetzung (A) zueinander in einem Bereich von 4:1 bis 1,5:1, besonders bevorzugt in einem Bereich von 3:1 bis 1,5:1, ganz besonders bevorzugt in einem Bereich von 2,5:1 bis 1,5:1, insbesondere in einem Bereich von 2,1:1 bis 1,5:1, jeweils bezogen auf den Festkörper-Anteil des wenigstens einen Bindemittels (A1) und des wenigstens einen Vernetzungsmittel (A2) in der Beschichtungszusammensetzung (A).

### Beschichtungszusammensetzung (A)

Die erfindungsgemäße wässrige Beschichtungszusammensetzung (A) eignet sich zur zumindest teilweisen Beschichtung eines elektrisch leitfähigen Substrats mit einem Elektrotauchlack, d.h. sie ist dazu geeignet, zumindest teilweise in Form einer Elektrotauchlackschicht auf die Substratoberfläche eines elektrisch leitfähigen Substrats aufgebracht zu werden. Vorzugsweise ist die gesamte erfindungsgemäße wässrige Beschichtungszusammensetzung (A) kathodisch abscheidbar.

Die erfindungsgemäßen wässrigen Beschichtungszusammensetzungen (A) enthalten als flüssiges Verdünnungsmittel Wasser.

Unter dem Begriff "wässrig" im Zusammenhang mit der Beschichtungszusammensetzung (A) werden vorzugsweise solche flüssigen Beschichtungszusammensetzungen (A) verstanden, die - als flüssiges Verdünnungsmittel, d.h. als flüssiges Lösemittel und/oder Dispergiermittel - Wasser als Hauptkomponente enthalten. Gegebenenfalls können die Beschichtungszusammensetzungen (A) jedoch wenigstens ein organisches Lösemittel in geringen Anteilen enthalten. Als Beispiele für solche organischen Lösemittel seien heterocyclische, aliphatische oder aromatische Kohlenwasserstoffe, ein- oder mehrwertige Alkohole, insbesondere Methanol und/oder Ethanol, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Methylisobutylketon, Aceton, Isophoron oder Mischungen davon genannt. Vorzugsweise beträgt der Anteil dieser organischen Lösemittel höchstens 20,0 Gew.-%, besonders bevorzugt höchstens 15,0 Gew.-%, ganz besonders bevorzugt höchstens 10,0 Gew.-%, insbesondere höchstens 5,0 Gew.-% oder höchstens 4,0 Gew.-% oder höchstens 3,0 Gew.-%, noch bevorzugter höchstens 2,5 Gew.-% oder höchstens 2,0 Gew.-% oder höchstens 1,5 Gew.-%, am meisten bevorzugt höchstens 1,0 Gew.-% oder höchstens 0,5 Gew.-%, jeweils bezogen auf den Gesamtanteil der in Beschichtungszusammensetzung (A) enthaltenen flüssigen Verdünnungsmitteln, d.h. flüssigen Lösemitteln und/oder Dispergiermitteln.

Die Anteile in Gew.-% aller in der erfindungsgemäßen Beschichtungszusammensetzung (A) enthaltenen Komponenten, d.h. die Anteile von (A1), Bismut, insbesondere in Form von (A3) und/oder (A4) und mit wenigstens einem Amin-blockierte Verbindung (P) und Wasser sowie gegebenenfalls (A2) und die optionalen Komponenten (A5), (A6) und/oder (A7) und/oder (A8) sowie gegebenenfalls vorhandene organische Lösemittel addieren sich vorzugsweise auf 100 Gew.-%, bezogen auf das Gesamtgewicht der Beschichtungszusammensetzung (A).

Vorzugsweise weist die wässrige Beschichtungszusammensetzung (A) einen Festkörper-Anteil im Bereich von 5 bis 45 Gew.-%, besonders bevorzugt im Bereich von 7,5 bis 35 Gew.-%, ganz besonders bevorzugt von 10 bis 30 Gew.-%, noch bevorzugter im Bereich von 12,5 bis 25 Gew.-% oder im Bereich von 15 bis 30 Gew.-% oder im Bereich von 15 bis 25 Gew-%, insbesondere von 17 bis 22 Gew.-%, jeweils bezogen auf das Gesamtgewicht der wässrigen Beschichtungszusammensetzung (A) auf. Bestimmungsmethoden zur Bestimmung des Festkörper-Anteils, insbesondere von Elektrotauchlackierungen, sind dem Fachmann bekannt. Vorzugsweise wird der Festkörper-Anteil gemäß DIN EN ISO 3251 (Datum: 1.6.2008) bestimmt.

Die erfindungsgemäß eingesetzte wässrige Beschichtungszusammensetzung (A) ist vorzugsweise eine wässrige Dispersion oder Lösung, vorzugsweise eine wässrige Dispersion.

Die erfindungsgemäße Beschichtungszusammensetzung (A) weist vorzugsweise einen pH-Wert in einem Bereich von 4,0 bis 6,5 auf. Besonders bevorzugt weist die erfindungsgemäß eingesetzte Beschichtungszusammensetzung (A) einen pH-Wert im Bereich von 4,2 bis 6,5, insbesondere im Bereich von 4,4 bis 6,5 oder im Bereich von 4,6 bis 6,5, insbesondere bevorzugt im Bereich von 4,8 bis 6,4, am meisten bevorzugt im Bereich von 5,0 bis 6,2 oder 5,2 bis 6,0 oder 5,5 bis 6,0 auf. Methoden zur Einstellung von pH-Werten in wässrigen Zusammensetzungen sind dem Fachmann bekannt. Vorzugsweise erfolgt die Einstellung des erwünschten pH-Werts durch Zugabe wenigstens einer Säure, besonders bevorzugt wenigstens einer anorganischen und/oder wenigstens einer organischen Säure. Geeignete anorganische Säuren sind beispielsweise Salzsäure, Schwefelsäure, Phosphorsäure und/oder Salpetersäure. Eine geeignete organische Säure ist beispielsweise Propionsäure, Milchsäure, Essigsäure und/oder Ameisensäure. Alternativ oder zusätzlich und zudem vorzugsweise kann auch die wenigstens eine in der Beschichtungszusammensetzung (A) gegebenenfalls vorhandene Komponente (A5) zur Einstellung des pH-Werts eingesetzt werden, sofern diese dazu geeignet ist, d.h. beispielsweise wenigstens eine deprotonierbare funktionelle Gruppe wie beispielsweise eine Carboxyl-Gruppe und/oder eine phenolische OH-Gruppe aufweist.

### Gesamtmenge an Bismut und Komponenten (A3) und/oder (A4)

Die Beschichtungszusammensetzung (A) enthält eine Gesamtmenge von wenigstens 30 ppm Bismut, bezogen auf das Gesamtgewicht der Beschichtungszusammensetzung (A).

Vorzugsweise beträgt die Gesamtmenge des in der Beschichtungszusammensetzung (A) enthaltenen Bismuts wenigstens 50 ppm oder wenigstens 100 ppm oder wenigstens 130 ppm oder wenigstens 150 ppm oder wenigstens 175 ppm oder wenigstens 200 ppm, besonders bevorzugt wenigstens 300 ppm, ganz besonders bevorzugt wenigstens 500 oder wenigstens 750 ppm, insbesondere wenigstens 1 000 ppm oder wenigstens 1 500 ppm oder wenigstens 2 000 ppm, jeweils bezogen auf das Gesamtgewicht der Beschichtungszusammensetzung (A). Dabei beträgt die Gesamtmenge des in der Beschichtungszusammensetzung (A) enthaltenen Bismuts vorzugsweise jeweils höchstens 20 000 ppm, besonders bevorzugt höchstens 15 000 ppm, ganz besonders bevorzugt höchstens 10 000 ppm oder höchstens 7 500 ppm, insbesondere höchstens 5 000 ppm oder höchstens 4 000 ppm, jeweils bezogen auf das Gesamtgewicht der Beschichtungszusammensetzung (A). Vorzugsweise liegt die Gesamtmenge des in der Beschichtungszusammensetzung (A) enthaltenen Bismuts, bezogen auf das Gesamtgewicht der wässrigen Beschichtungszusammensetzung (A) in einem Bereich von 30 ppm bis 20 000 ppm, besonders bevorzugt in einem Bereich von 50 ppm bis 15 000 ppm, ganz besonders bevorzugt in einem Bereich von 100 ppm bis 10 000 ppm oder in einem Bereich von 130 ppm bis 10 000 ppm, insbesondere bevorzugt in einem Bereich von 500 ppm bis 10 000 ppm oder in einem Bereich von 500 bis 20 000 ppm oder in einem Bereich von 1 000 ppm bis 10 000 ppm oder in einem Bereich von 1 000 ppm bis 5 000 ppm oder in einem Bereich von 500 ppm bis 3 000 ppm. Die Menge an Bismut, berechnet als Metall, kann mittels der nachstehenden Methode (ICP-OES) bestimmt werden: dabei kann sowohl die Gesamtmenge an Bismut als auch der Anteil an (A3) und (A4) bestimmt werden.

Unter dem Begriff "Bismut" im Zusammenhang mit der Gesamtmenge an Bismut in der Beschichtungszusammensetzung (A) und insbesondere gegebenenfalls der Komponente (A3) sowie gegebenenfalls (A4) werden im Sinne der vorliegenden Erfindung vorzugsweise gegebenenfalls geladene wie zum Beispiel positiv geladene kationische Bismut-Atome unterschiedlicher Wertigkeiten verstanden. Das Bismut kann dabei in trivalenter Form (Bi(III)) vorliegen, kann aber alternativ oder zusätzlich auch in anderen Oxidationsstufen vorliegen. Die Menge an Bismut wird dabei jeweils als Bismut-Metall berechnet.

Die Gesamtmenge an in der Beschichtungszusammensetzung (A) enthaltenem Bismut kann dabei nur solches Bismut beinhalten, welches in einer in der Beschichtungszusammensetzung (A) gelöst vorliegenden Form (A3) vorhanden ist. Die Gesamtmenge an in der Beschichtungszusammensetzung (A) enthaltenem Bismut kann dabei alternativ Bismut beinhalten, welches sowohl in einer in der Beschichtungszusammensetzung (A) gelöst vorliegenden Form (A3) als auch in einer in der Beschichtungszusammensetzung (A) ungelöst vorliegenden Form (A4) vorhanden ist. Vorzugsweise liegt zumindest ein Teil der Gesamtmenge des in der Beschichtungszusammensetzung (A) enthaltenen Bismuts in einer in der Beschichtungszusammensetzung (A) gelöst vorliegenden Form (A3) vor.

Vorzugsweise ist die Gesamtmenge des in der Beschichtungszusammensetzung (A) enthaltenen Bismuts jeweils die Summe aus (A3) und (A4). In einer anderen bevorzugten Ausführungsform entspricht die Gesamtmenge des in der Beschichtungszusammensetzung (A) enthaltenen Bismuts der Menge an Komponente (A3).

Enthält die Beschichtungszusammensetzung (A) zudem eine Komponente (A5), so liegen die Komponenten (A3) und (A5) vorzugsweise in Form eines Komplexes und/oder Salzes aus den Komponenten (A3) und (A5) in der Beschichtungszusammensetzung (A) vor. Entspricht die Gesamtmenge an Bismut der Menge an Komponente (A3), so liegen die wenigstens 30 ppm Bismut, welche dann in einer in der Beschichtungszusammensetzung (A) als Komponente (A3) gelösten Form vorliegen, vorzugsweise gemeinsam mit der Komponente (A5) in Form einer in der Beschichtungszusammensetzung (A) gelösten Bismut-Verbindung vor, insbesondere in Form wenigstens eines gelösten Salzes und/oder eines Komplexes aus den Komponenten (A3) und (A5). Alternativ und/oder zusätzlich kann die Komponente (A3) beispielsweise auch in Form von hydratisiertem trivalenten Bismut vorliegen.

Vorzugsweise liegt als Komponente (A3) zumindest teilweise trivalentes Bismut vor. Dieses kann hydratisiert und/oder in Form wenigstens eines gelösten Salzes und/oder eines Komplexes, insbesondere gemeinsam mit (A5), vorliegen.

Unter dem Begriff "in gelöst vorliegender Form" im Zusammenhang mit der Komponente (A3) der erfindungsgemäßen Beschichtungszusammensetzung (A) wird vorzugsweise verstanden, dass die Komponente (A3) zu wenigstens 95 mol-% oder wenigstens 97,5 mol-%, besonders bevorzugt zu wenigstens 99 mol-% oder zu wenigstens 99,5 mol-%, ganz besonders bevorzugt zu wenigstens 99,8 mol-% oder zu wenigstens 99,9 mol-%, insbesondere zu 100 mol-%, bezogen auf die Gesamtmenge dieser Komponente (A3) in der Beschichtungszusammensetzung (A), in einer in der wässrigen Beschichtungszusammensetzung (A) gelösten Form vorliegt. Die Komponente (A3) ist daher vorzugsweise wasserlöslich. Vorzugsweise liegt die Komponente (A3) wenigstens bei einer Temperatur der Beschichtungszusammensetzung (A) in einem Bereich von 18 bis 40 °C in gelöst vorliegender Form in der Beschichtungszusammensetzung (A) vor.

Vorzugsweise ist die Komponente (A3) erhältlich ist aus wenigstens einer Bismut-Verbindung ausgewählt aus der Gruppe bestehend aus Oxiden, basischen Oxiden, Hydroxiden, Carbonaten, Nitraten, basischen Nitraten, Salicylaten und basischen Salicylaten des Bismuts sowie Mischungen davon. Dabei wird wenigstens eine solche Bismut-Verbindung vorzugsweise in Wasser und vorzugsweise in Gegenwart wenigstens eines Komplexierungsmittels (A5) teilweise unter Erhalt der Komponente (A3) umgesetzt.

Vorzugsweise wird zur Herstellung der wässrigen Beschichtungszusammensetzung (A) wenigstens eine Komponente (A5) in Form einer wässrigen Lösung mit wenigstens einer Bismut-Verbindung ausgewählt aus der Gruppe bestehend aus Oxiden, basischen Oxiden, Hydroxiden, Carbonaten, Nitraten, basischen Nitraten, Salicylaten und basischen Salicylaten des Bismuts sowie Mischungen davon unter Erhalt einer wässrigen Lösung oder Dispersion oder Suspension, vorzugsweise Lösung, gegebenenfalls nach Filtrieren, des Umsetzungsprodukts aus (A5) und der Bismut-Verbindung, umgesetzt und dieses vorzugsweise wasserlösliches Umsetzungsprodukt zur Herstellung der erfindungsgemäß eingesetzten Beschichtungszusammensetzung (A) eingesetzt.

Besonders bevorzugt wird zur Herstellung der wässrigen Beschichtungszusammensetzung (A) wenigstens eine Komponente (A5) ausgewählt aus der Gruppe bestehend aus Milchsäure und Dimethylpropionsäure in Form einer wässrigen Lösung mit wenigstens einer der vorstehend genannten Bismut-Verbindungen, vorzugsweise mit Bismut(III)-oxid, unter Erhalt einer wässrigen Lösung oder Dispersion oder Suspension, vorzugsweise Lösung, gegebenenfalls nach Filtrieren, des Umsetzungsprodukts aus (A5) und der Bismut-Verbindung umgesetzt und dieses vorzugsweise wasserlösliche Umsetzungsprodukt zur Herstellung der erfindungsgemäß eingesetzten Beschichtungszusammensetzung (A) eingesetzt.

Enthält die erfindungsgemäße Beschichtungszusammensetzung neben (A3) zudem die Komponente (A4), so enthält (A) vorzugsweise eine Gesamtmenge von wenigstens 130 ppm Bismut, bezogen auf das Gesamtgewicht der Beschichtungszusammensetzung (A), wobei davon
(A3) wenigstens 130 ppm Bismut, bezogen auf das Gesamtgewicht der Beschichtungszusammensetzung (A), in einer in der Beschichtungszusammensetzung (A) gelöst vorliegenden Form vorhanden sind,
   oder
(A3) wenigstens 30 ppm Bismut, bezogen auf das Gesamtgewicht der Beschichtungszusammensetzung (A), in einer in der Beschichtungszusammensetzung (A) gelöst vorliegenden Form vorhanden sind, und
(A4) wenigstens 100 ppm Bismut, bezogen auf das Gesamtgewicht der Beschichtungszusammensetzung (A), in einer in der Beschichtungszusammensetzung (A) ungelöst vorliegenden Form vorhanden sind.

Die wenigstens 100 ppm Bismut, welche dabei in dieser Ausführungsform in einer in der Beschichtungszusammensetzung (A) als Komponente (A4) ungelösten Form vorliegen, liegen vorzugsweise in Form einer in der Beschichtungszusammensetzung (A) ungelösten Bismut-Verbindung vor, insbesondere in Form wenigstens eines ungelösten Bismut-Salzes, Hydroxids und/oder Oxids.

Vorzugsweise beträgt der Anteil der Komponente (A4) innerhalb der Gesamtmenge des in der Beschichtungszusammensetzung (A) enthaltenen Bismuts, d.h. bezogen auf die Gesamtmenge des in der Beschichtungszusammensetzung (A) enthaltenen Bismuts in Mol, wenigstens 10 mol-%, besonders bevorzugt wenigstens 20 mol-% oder wenigstens 30 mol-%, ganz besonders bevorzugt wenigstens 40 mol-% oder wenigstens 50 mol-% oder wenigstens 60 mol-% oder wenigstens 70 mol-%. Dabei beträgt der Anteil der Komponente (A4) innerhalb der Gesamtmenge des in der Beschichtungszusammensetzung (A) enthaltenen Bismuts vorzugsweise jeweils höchstens 98 mol-%, besonders bevorzugt höchstens 97 mol-% oder höchstens 96 mol-%, ganz besonders bevorzugt höchstens 95 mol-%.

Vorzugsweise ist der Anteil der Komponente (A4) in mol-% innerhalb der Gesamtmenge des in der Beschichtungszusammensetzung (A) enthaltenen Bismuts größer als der Anteil der Komponente (A3) in mol-%.

Unter dem Begriff "in ungelöst vorliegender Form" im Zusammenhang mit der Komponente (A4) der erfindungsgemäßen Beschichtungszusammensetzung (A) wird vorzugsweise verstanden, dass die Komponente (A4) zu wenigstens 95 mol-% oder wenigstens 97,5 mol-%, besonders bevorzugt zu wenigstens 99 mol-% oder zu wenigstens 99,5 mol-%, ganz besonders bevorzugt zu wenigstens 99,8 mol-% oder zu wenigstens 99,9 mol-%, insbesondere zu 100 mol-%, bezogen auf die Gesamtmenge dieser Komponente (A4) in der Beschichtungszusammensetzung (A), in einer in der wässrigen Beschichtungszusammensetzung (A) ungelösten Form vorliegt. Die Komponente (A4) ist daher vorzugsweise wasserunlöslich. Vorzugsweise liegt die Komponente (A4) wenigstens bei einer Temperatur der Beschichtungszusammensetzung (A) in einem Bereich von 18 bis 40 °C in ungelöst vorliegender Form in der Beschichtungszusammensetzung (A) vor.

Vorzugsweise ist die Komponente (A4) erhältlich aus wenigstens einer Bismut-Verbindung ausgewählt aus der Gruppe bestehend aus Oxiden, basischen Oxiden, Hydroxiden, Carbonaten, basischen Nitraten (Subnitraten), Salicylaten und basischen Salicylaten (Subsalicylaten) des Bismuts sowie Mischungen davon, besonders bevorzugt erhältlich aus Bismut-Subnitrat.

Vorzugsweise enthält die Beschichtungszusammensetzung (A) eine Gesamtmenge von wenigstens 300 ppm Bismut, bezogen auf das Gesamtgewicht der Beschichtungszusammensetzung (A), wobei davon
(A3) wenigstens 300 ppm Bismut, bezogen auf das Gesamtgewicht der Beschichtungszusammensetzung (A), in einer in der Beschichtungszusammensetzung (A) gelöst vorliegenden Form
   oder
(A3) wenigstens 100 ppm Bismut, bezogen auf das Gesamtgewicht der Beschichtungszusammensetzung (A), in einer in der Beschichtungszusammensetzung (A) gelöst vorliegenden Form und
(A4) wenigstens 200 ppm Bismut, bezogen auf das Gesamtgewicht der Beschichtungszusammensetzung (A), in einer in der Beschichtungszusammensetzung (A) ungelöst vorliegenden Form vorhanden sind.

Besonders bevorzugt enthält die Beschichtungszusammensetzung (A) eine Gesamtmenge von wenigstens 400 ppm Bismut, bezogen auf das Gesamtgewicht der Beschichtungszusammensetzung (A), wobei davon
(A3) wenigstens 400 ppm Bismut, bezogen auf das Gesamtgewicht der Beschichtungszusammensetzung (A), in einer in der Beschichtungszusammensetzung (A) gelöst vorliegenden Form
   oder
(A3) wenigstens 150 ppm Bismut, bezogen auf das Gesamtgewicht der Beschichtungszusammensetzung (A), in einer in der Beschichtungszusammensetzung (A) gelöst vorliegenden Form und
(A4) wenigstens 250 ppm Bismut, bezogen auf das Gesamtgewicht der Beschichtungszusammensetzung (A), in einer in der Beschichtungszusammensetzung (A) ungelöst vorliegenden Form vorhanden sind.

Ganz besonders bevorzugt enthält die Beschichtungszusammensetzung (A) eine Gesamtmenge von wenigstens 500 ppm Bismut, bezogen auf das Gesamtgewicht der Beschichtungszusammensetzung (A), wobei davon
(A3) wenigstens 500 ppm Bismut, bezogen auf das Gesamtgewicht der Beschichtungszusammensetzung (A), in einer in der Beschichtungszusammensetzung (A) gelöst vorliegenden Form
   oder
(A3) wenigstens 200 ppm Bismut, bezogen auf das Gesamtgewicht der Beschichtungszusammensetzung (A), in einer in der Beschichtungszusammensetzung (A) gelöst vorliegenden Form und
(A4) wenigstens 300 ppm Bismut, bezogen auf das Gesamtgewicht der Beschichtungszusammensetzung (A), in einer in der Beschichtungszusammensetzung (A) ungelöst vorliegenden Form vorhanden sind.

Die erfindungsgemäße Beschichtungszusammensetzung (A) ist vorzugsweise erhältlich durch
zumindest teilweises, vorzugsweise vollständiges, Überführen wenigstens einer in Wasser unlöslichen Bismut-Verbindung, die vorzugsweise ausgewählt ist aus der Gruppe bestehend aus Oxiden, basischen Oxiden, Hydroxiden, Carbonaten, Nitraten, basischen Nitraten, Salicylaten und basischen Salicylaten des Bismuts sowie Mischungen davon durch zumindest teilweise, vorzugsweise vollständige Umsetzung von dieser Verbindung mit wenigstens einem zur Komplexierung von Bismut geeigneten wenigstens zweizähnigen Komplexierungsmittel (A5) in wenigstens eine in Wasser lösliche Bismut-Verbindung (A3) in Wasser, gegebenenfalls in Gegenwart wenigstens einer der Komponenten (A6) bis (A8) und/oder mit wenigstens einem Amin blockierten (P), und gegebenenfalls in Gegenwart (A1) und/oder (A2), unter Erhalt einer wenigstens die Komponenten (A3) und (A5) sowie gegebenenfalls wenigstens einer der Komponenten (A4) und/oder (A6) bis (A8) und/oder gegebenenfalls (A1) und/oder (A2) und/oder der mit wenigstens einem Amin blockierten Verbindung (P) der Beschichtungszusammensetzung (A) enthaltenen Mischung, und
gegebenenfalls Mischen der so erhaltenen Mischung wenigstens mit der Komponente (A1) und gegebenenfalls der Komponente (A2), gegebenenfalls in Gegenwart wenigstens einer der Komponenten (A6) bis (A8) und/oder mit wenigstens einem Amin blockierten Verbindung (P), unter Erhalt der Beschichtungszusammensetzung (A).

Gegebenenfalls ist die eingesetzte in Wasser unlösliche Bismut-Verbindung Bestandteil einer Pigmentpaste, welche wenigstens ein Pigment (A6) enthält, insbesondere wenn (A) die Komponente (A4) enthält.

Entspricht die Gesamtmenge an Bismut in (A) der Menge an Komponente (A3), so wird zur Herstellung der wässrigen Beschichtungszusammensetzung (A) vorzugsweise wenigstens eine Komponente (A5) in Form einer wässrigen Lösung mit wenigstens einer in Wasser unlöslichen Bismut-Verbindung, die vorzugsweise ausgewählt ist aus der Gruppe bestehend aus Oxiden, basischen Oxiden, Hydroxiden, Carbonaten, Nitraten, basischen Nitraten, Salicylaten und basischen Salicylaten des Bismuts sowie Mischungen davon, umgesetzt und die so erhaltene (A3) enthaltene wässrige Lösung des Umsetzungsprodukts aus (A5) und dieser Bismut-Verbindung wenigstens mit der Komponente (A1) und gegebenenfalls (A2) sowie der mit wenigstens einem Amin blockierten Verbindung (P) und optional wenigstens einer der Komponenten (A6) bis (A8) unter Erhalt der wässrigen Beschichtungszusammensetzung (A) vermischt.

### Optionale Komponente (A5)

Die erfindungsgemäße Beschichtungszusammensetzung (A) enthält vorzugsweise wenigstens ein zur Komplexierung von Bismut geeignetes wenigstens zweizähniges Komplexierungsmittel als Komponente (A5), wobei das wenigstens eine Komplexierungsmittel (A5) in der wässrigen Beschichtungszusammensetzung (A) vorzugsweise in einem Anteil von wenigstens 5 mol-%, bezogen auf die Gesamtmenge des in der Beschichtungszusammensetzung (A) enthaltenen Bismuts, vorhanden ist.

Dabei ist die Komponente (A5) sowohl zur Komplexierung von (A3) als auch (A4) geeignet. Vorzugsweise ist das wenigstens eine Komplexierungsmittel (A5) zur Ausbildung von Salzen und/oder Komplexen mit der in der wässrigen Beschichtungszusammensetzung (A) enthaltenen Komponente (A3) geeignet.

Als Komponente (A5) sind insbesondere solche Komplexierungsmittel geeignet, welche in der Lage sind, in Wasser Bismut, vorzugsweise bei Temperaturen im Bereich von 10 bis 90 °C oder im Bereich von 20 bis 80 °C, besonders bevorzugt im Bereich von 30 bis 75 °C, in eine in der Beschichtungszusammensetzung (A) lösliche Form (A3) zu überführen.

Vorzugsweise ist das wenigstens eine Komplexierungsmittel (A5) in der wässrigen Beschichtungszusammensetzung (A) in einem Anteil von wenigstens 7,5 mol-% oder wenigstens 10 mol-%, besonders bevorzugt in einem Anteil von wenigstens 15 mol-% oder wenigstens 20 mol-%, ganz besonders bevorzugt in einem Anteil von wenigstens 30 mol-% oder wenigstens 40 mol-%, insbesondere in einem Anteil von wenigstens 50 mol-%, jeweils bezogen auf die Gesamtmenge des in der Beschichtungszusammensetzung (A) enthaltenen Bismuts, vorhanden. Die jeweilige Menge des erfindungsgemäß eingesetzten Komplexierungsmittel (A5) ist dabei beispielsweise abhängig von der Zähnigkeit von (A5) und/oder der Komplexierungsstärke von (A5). Das wenigstens eine Komplexierungsmittel (A5) ist in der wässrigen Beschichtungszusammensetzung (A) aber in einem solchen Anteil vorhanden, dass gewährleistet ist, dass wenigstens 30 ppm und vorzugsweise wenigstens 130 ppm Bismut, bezogen auf das Gesamtgewicht der Beschichtungszusammensetzung (A), in einer in der Beschichtungszusammensetzung (A) gelöst vorliegenden Form vorhanden sind.

Das Komplexierungsmittel (A5) ist vorzugsweise keine Bindemittel-Komponente (A1) und wird insbesondere auch nicht zur Herstellung des Bindemittels (A1) eingesetzt.

Das Komplexierungsmittel (A5) ist wenigstens zweizähnig. Einem Fachmann ist der Begriff der "Zähnigkeit" bekannt. Darunter wird die Anzahl möglicher Bindungen verstanden, die von einem Molekül des Komplexierungsmittels (A5) an das zu komplexierende Atom wie an das zu komplexierende Bismut-Atom und/oder Bismut-Ion ausgebildet werden können. Bevorzugt ist (A5) zweizähnig, dreizähnig oder vierzähnig, insbesondere zweizähnig.

Das Komplexierungsmittel (A5) kann als Anion, beispielsweise als Anion einer organischen Mono- oder Polycarbonsäure vorliegen.

Vorzugsweise weist das Komplexierungsmittel (A5) wenigstens zwei Donoratome auf, d.h. wenigstens zwei Atome mit mindestens einem freien Elektronenpaar in der Valenzschale. Bevorzugte Donoratome sind ausgewählt aus der Gruppe bestehend aus N-, S- und O-Atomen, sowie Mischungen davon. Besonders bevorzugt sind Komplexierungsmittel (A5), die wenigstens ein Sauerstoff-Donoratom und wenigstens ein Stickstoff-Donoratom aufweisen oder die wenigstens zwei Sauerstoff-Donoratome aufweisen. Ganz besonders bevorzugt sind Komplexierungsmittel (A5), die wenigstens zwei Sauerstoff-Donoratome aufweisen.

Sind O- und/oder S-Donoratome im Komplexierungsmittel (A5) vorhanden, so ist vorzugsweise jedes dieser wenigstens zwei Donoratome an ein anderes Trägeratom wie ein Kohlenstoffatom gebunden, welches selbst kein Donoratom darstellt. Sind wenigstens zwei N-Donoratome im Komplexierungsmittel (A5) vorhanden, so kann jedes dieser wenigstens zwei N-Donoratome an das gleiche Trägeratom gebunden werden, welches selbst kein Donoratom darstellt, wie beispielsweise im Fall von Guanidin oder Harnstoff.

Sind O- und/oder S-Donoratome im Komplexierungsmittel (A5) wie beispielsweise wenigstens zwei O-Donoratome vorhanden und ist jedes dieser wenigstens zwei Donoratome an ein anderes Trägeratom wie an ein Kohlenstoffatom gebunden, welches selbst kein Donoratom darstellt, so können diese wenigstens zwei Trägeratome direkt aneinander gebunden, d.h. benachbart sein, wie es beispielsweise bei Oxalsäure, Milchsäure, Bicin (N,N'-Bis((2-Hydroxyethyl)glycin), EDTA oder α-Aminosäuren der Fall ist. Zwei Donoratome, die zwei aneinander gebundenen Trägeratome und das zu komplexierende Atom und/oder Ion können dann einen Fünfring ausbilden. Die beiden Trägeratome können alternativ auch über ein einziges weiteres Atom miteinander verbrückt sein, wie es beispielsweise bei Acetylacetonat oder hinsichtlich der Phosphoratome als Trägeratome bei 1-Hydroxyethan-1,1-diphosphonsäure der Fall ist. Zwei Donoratome, die zwei Trägeratome, das diese Trägeratome verbrückende Atom und das zu komplexierende Atom und/oder Ion können dann einen Sechsring ausbilden. Die mindestens zwei Trägeratome können ferner durch zwei weitere Atome miteinander verbunden sein, wie es beispielsweise bei Maleinsäure der Fall ist. Liegt zwischen den beiden Atomen, die die Trägeratome miteinander verbinden, eine Doppelbindung vor, so müssen die beiden Trägeratome in cis-Stellung zueinander stehen, um eine Siebenringbildung mit dem zu komplexierenden Atom und/oder Ion zu ermöglichen. Sind zwei Trägeratome Teil eines aromatischen Systems oder sind diese Trägeratome durch bis zu zwei weitere Trägeratome miteinander verbunden, so sind Stellungen im aromatischen System in 1,2- und 1,3-Position bevorzugt, wie beispielsweise im Fall der Gallussäure, des Tirons der Salicylsäure oder der Phthalsäure. Weiterhin können die Donoratome auch selbst Teil eines aliphatischen oder aromatischen Ringsystems sein, wie beispielsweise im Fall des 8-Hydroxychinolins.

Ganz besonders bevorzugt sind Komplexierungsmittel (A5), die wenigstens zwei Sauerstoff-Donoratome aufweisen. In diesem Fall kann wenigstens eines der Sauerstoff-Donoratome eine negative Ladung aufweisen, wie beispielsweise im Fall von Acetylacetonat, oder Teil einer Säure-Gruppe sein wie beispielsweise einer Carbonsäure-Gruppe, Phosphonsäure-Gruppe oder Sulfonsäure-Gruppe. Gegebenenfalls kann auch oder alternativ das Sauerstoffatom der Säure-Gruppe eine negative Ladung tragen wie bei Deprotonierung und Ausbildung einer Carboxylat-Gruppe, Phosphonat oder Sulfonat-Gruppe.

Ist wenigstens ein Donoratom ein N-Atom, so ist ein weiteres Donoratom vorzugsweise ein O-Atom, das eine negative Ladung trägt, oder Teil einer Säuregruppe (Carbonsäure, Phosphonsäure, Sulfonsäure etc.) ist.

Weist (A5) nur N-Atome als Donoratome auf, so kann auch diese Komponente als Anion vorliegen wie beispielsweise im Fall von 1,2- oder 1,3- Dioxim-Anionen. Bevorzugte Trägeratome in diesem Fall sind C-Atome. N-Atome als Donoratome liegen vorzugsweise in Form von primären, sekundären oder tertiären Aminogruppen oder als Oximgruppen vor.

Weist (A5) nur S-Atome und/oder O-Atome als Donoratome auf, so sind bevorzugte Trägeratome in diesem Fall C-Atome, S-Atome und P-Atome, insbesondere C-Atome. O-Atome als Donoratome liegen vorzugsweise zumindest anteilig in anionischer Form (z.B. Acetylacetonat) oder in Form von Carboxylat-Gruppen, Phosphonatgruppen oder Sulfonatgruppen vor. S-Atome als Donoratome liegen bevorzugt in der Form von Thiolen, wie beispielsweise im Cystein, vor.

Vorzugsweise ist das Komplexierungsmittel (A5) ausgewählt aus der Gruppe bestehend aus stickstofffreien vorzugsweise wenigstens einfach Hydroxyl-substituierten organischen Monocarbonsäuren, stickstofffreien gegebenenfalls wenigstens einfach Hydroxyl-substituierten organischen Polycarbonsäuren, gegebenenfalls wenigstens einfach Hydroxyl-substituierten Aminopolycarbonsäuren, gegebenenfalls wenigstens einfach Hydroxyl-substituierten Aminomonocarbonsäuren, und Sulfonsäuren, sowie jeweils deren Anionen, und zudem vorzugsweise gegebenenfalls wenigstens einfach Hydroxyl-substituierten Monoaminen und gegebenenfalls wenigstens einfach Hydroxyl-substituierten Polyaminen, und chemischen Verbindungen, die wenigstens zwei-O-Donoratome enthalten und nicht unter die innerhalb dieser Aufzählung genannten Verbindungen fallen, wie beispielsweise 8-Hydroxychinolin und Acetylaceton.

Als Komplexierungsmittel (A5) eignet sich beispielsweise wenigstens eine organische Mono- oder Polycarbonsäure, welche vorzugsweise kein(e) Stickstoffatom(e) aufweist, und/oder deren Anionen.

Unter dem Begriff "Polycarbonsäure" wird im Sinne der vorliegenden Erfindung vorzugsweise eine Carbonsäure verstanden, welche zwei oder mehrere Carboxyl-Gruppen, beispielsweise 2, 3, 4, 5 oder 6 Carboxyl-Gruppen aufweist. Besonders bevorzugt weist die Polycarbonsäure 2 oder 3 Carboxyl-Gruppen auf. Bei Polycarbonsäuren mit zwei Carboxyl-Gruppen handelt es sich um Dicarbonsäuren und bei Polycarbonsäuren mit drei Carboxyl-Gruppen handelt es sich um Tricarbonsäuren. Die erfindungsgemäß eingesetzten Polycarbonsäuren können aromatisch, teilaromatisch, cycloaliphatisch, teilcycloaliphatisch oder aliphatisch sein, vorzugsweise aliphatisch sein. Vorzugsweise weisen die erfindungsgemäß eingesetzten Polycarbonsäuren 2 bis 64 Kohlenstoffatome, besonders bevorzugt 2 bis 36, insbesondere 3 bis 18 oder 3 bis 8 Kohlenstoffatome auf. Beispiele für Polycarbonsäuren sind Oxalsäure, Malonsäure, Bernsteinsäure, Glutarsäure, Adipinsäure, Weinsäure, Citronensäure, Schleimsäure und Äpfelsäure.

Unter dem Begriff "Monocarbonsäure" wird im Sinne der vorliegenden Erfindung vorzugsweise eine vorzugsweise aliphatische Monocarbonsäure verstanden, die genau eine -C(=O)-OH-Gruppe aufweist. Vorzugsweise weisen die erfindungsgemäß eingesetzten Monocarbonsäuren 1 bis 64 Kohlenstoffatome, besonders bevorzugt 1 bis 36, insbesondere 2 bis 18 oder 3 bis 8 Kohlenstoffatome auf. Vorzugsweise weist die Monocarbonsäure dabei wenigstens eine Hydroxyl-Gruppe auf.

Wird als Komplexierungsmittel (A5) wenigstens eine organische Mono- oder Polycarbonsäure, welche vorzugsweise kein(e) Stickstoffatom(e) aufweist, und/oder deren Anionen, eingesetzt, so weist die wenigstens eine organische Mono- oder Polycarbonsäure und/oder deren Anionen vorzugsweise wenigstens eine Carboxyl-Gruppe bzw. Carboxylat-Gruppe auf, die an einen organischen Rest mit 1-8 Kohlenstoffatomen gebunden ist, wobei der organische Rest gegebenenfalls mit wenigstens einem, vorzugsweise wenigstens einem oder wenigstens zwei, Substituenten ausgewählt aus der Gruppe bestehend aus Hydroxyl-Gruppen, EsterGruppen und Ether-Gruppen substituiert sein kann.

Vorzugsweise ist die organische Mono- oder Polycarbonsäure ausgewählt aus der Gruppe bestehend aus Mono- und Polycarbonsäuren und/oder deren Anionen, die in α-, β- oder γ-Stellung zur wenigstens einen Carboxyl-Gruppe bzw. Carboxylat-Gruppe eine oder zwei alkoholische Hydroxylgruppe(n) oder Estergruppe(n) oder Ethergruppe(n) aufweisen. Beispiele derartiger Säuren sind: Glykolsäure (Hydroxyessigsäure), Milchsäure, γ-Hydroxypropionsäure, α-Methylolpropionsäure, α,α'-Dimethylol-propionsäure, Weinsäure, Hydroxyphenylessigsäure, Äpfelsäure, Citronensäure und Zuckersäuren wie beispielsweise Gluconsäure und Schleimsäure. Zyklische oder aromatische Carbonsäuren sind ebenfalls geeignet, wenn die Hydroxyl-, Ester- oder Ethergruppen so zur Carboxylgruppe angeordnet sind, dass eine Bildung von Komplexen möglich wird. Beispiele hierfür sind Salicylsäure, Gallussäure, Hydroxybenzoesäure und 2,4-Dihydroxybenzoesäure. Beispiele geeigneter Carbonsäuren mit einer Ethergruppe oder Estergruppe sind Methoxyessigsäure, Methoxyessigsäuremethylester, Methoxyessigsäureisopropylester, Dimethoxy-essigsäure, Ethoxyessigsäure, Propoxyessigsäure, Butoxyessigsäure, 2-Ethoxy-2-Methylpropansäure, 3-Ethoxypropansäure, Butoxypropansäure und deren Ester, Butoxybuttersäure und α- oder β-Methoxypropionsäure. Optisch aktive Carbonsäuren wie Milchsäure können in der L-Form, in der D-Form oder als Racemat eingesetzt werden. Vorzugsweise werden Milchsäure (in optisch aktiver Form, bevorzugt als L-Form, oder als Racemat) und/oder Dimethylolpropionsäure verwendet.

Es können jedoch auch organische Mono- oder Polycarbonsäuren und/oder deren Anionen als Komplexierungsmittel (A5) eingesetzt werden, welche Stickstoffatome aufweisen, insbesondere Aminomonocarbonsäuren und/oder Aminopolycarbonsäuren, und/oder deren Anionen.

Unter dem Begriff "Aminopolycarbonsäure" wird im Sinne der vorliegenden Erfindung vorzugsweise eine Carbonsäure verstanden, welche zwei oder mehrere Carboxyl-Gruppen, beispielsweise 2, 3, 4, 5 oder 6 Carboxyl-Gruppen aufweist, und zudem wenigstens eine Amino-Gruppe, beispielsweise wenigstens eine primäre und/oder sekundäre und/oder tertiäre Amino-Gruppe, insbesondere wenigstens eine oder wenigstens zwei tertiäre Amino-Gruppen, aufweist. Vorzugsweise weisen die erfindungsgemäß eingesetzten Aminopolycarbonsäuren 2 bis 64 Kohlenstoffatome, besonders bevorzugt 2 bis 36, insbesondere 3 bis 18 oder 3 bis 8 Kohlenstoffatome auf. Beispiele von Aminopolycarbonsäuren sind Ethylendiamintetraessigsäure (EDTA), Diethylentriaminpentaessigsäure (DTPA), Nitrilotriessigsäure (NTA), Asparaginsäure, Methylglycidindiessigsäure (MGDA), β-Alanindiessigsäure (β-ADA), Imidosuccinat (IDS), Hydroxyethyleniminodiacetat (HEIDA) und N-(2-Hydroxyethyl)-ethylendiamin-N,N,N'-triessigsäure (HEDTA).

Unter dem Begriff "Aminomonocarbonsäure" wird im Sinne der vorliegenden Erfindung vorzugsweise eine Carbonsäure verstanden, welche genau eine Carboxyl-Gruppe aufweist, und zudem wenigstens eine Amino-Gruppe, beispielsweise wenigstens eine primäre und/oder sekundäre und/oder tertiäre Amino-Gruppe, insbesondere wenigstens eine oder wenigstens zwei tertiäre Amino-Gruppen, aufweist. Vorzugsweise weisen die erfindungsgemäß eingesetzten Aminomonocarbonsäuren 2 bis 64 Kohlenstoffatome, besonders bevorzugt 2 bis 36, insbesondere 3 bis 18 oder 3 bis 8 Kohlenstoffatome auf. Vorzugsweise weist die Aminomonocarbonsäure dabei wenigstens eine Hydroxyl-Gruppe auf. Ein Beispiel einer Aminomonocarbonsäure ist Bicin (N,N'-Bis((2-Hydroxyethyl)glycin). Andere Beispiele sind Glycin, Alanin, Lysin, Cystein, Serin, Threonin, Asparagin, β-Alanin, 6-Aminocapronsäure, Leucin und Dihydroxyethylglycin (DHEG) sowie Panthothensäure.

Als Komplexierungsmittel (A5) eignet sich beispielsweise zudem wenigstens ein Polyamin oder Monoamin.

Unter dem Begriff "Polyamin" wird im Sinne der vorliegenden Erfindung vorzugsweise eine Verbindung verstanden, welche wenigstens zwei Amino-Gruppen wie primäre oder sekundäre oder tertiäre Amino-Gruppen aufweist. Die Amino-Gruppen können auch als Oxim-Gruppen vorliegen. Insgesamt kann ein Polyamin jedoch vorzugsweise bis einschließlich 10 Amino-Gruppen aufweisen, d.h. zusätzlich zu den wenigstens zwei Amino-Gruppen noch bis zu einschließlich 8 weitere, d.h. 1, 2, 3, 4, 5, 6, 7 oder 8, vorzugsweise bis zu einschließlich 5 weitere Amino-Gruppen enthalten, bei denen es sich vorzugsweise um primäre oder sekundäre oder tertiäre Amino-Gruppen handelt. Vorzugsweise ist das Polyamin ein Diamin oder Triamin, besonders bevorzugt ein Diamin. Vorzugsweise weisen die erfindungsgemäß eingesetzten Polyamine 2 bis 64 Kohlenstoffatome, besonders bevorzugt 2 bis 36, insbesondere 3 bis 18 oder 3 bis 8 Kohlenstoffatome auf. Wenigstens eines der Kohlenstoffatome ist vorzugsweise mit einer Hydroxyl-Gruppe substituiert. Besonders bevorzugt sind daher Hydroxyalkylpolyamine. Beispiele von Polyaminen sind N,N,N',N'-Tetrakis-2-hydroxyethylethylendiamin (THEED), N,N,N',N'-Tetrakis-2-hydroxypropylethylendiamin (Quadrol), Guanidin, Diethylentriamin und Diphenylcarbazid sowie Diacetyldioxim.

Unter dem Begriff "Monoamin" wird im Sinne der vorliegenden Erfindung vorzugsweise ein vorzugsweise aliphatisches Monoamin verstanden, das genau eine Amino-Gruppe, wie beispielsweise genau eine primäre oder sekundäre oder insbesondere tertiäre Amino-Gruppe aufweist. Vorzugsweise weisen die erfindungsgemäß eingesetzten Monoamine 1 bis 64 Kohlenstoffatome, besonders bevorzugt 1 bis 36, insbesondere 2 bis 18 oder 3 bis 8 Kohlenstoffatome auf. Vorzugsweise weist das Monoamin dabei wenigstens eine Hydroxyl-Gruppe auf. Ein Beispiel für ein Monoamin ist Triisopropanolamin.

Als Komplexierungsmittel (A5) eignet sich beispielsweise zudem wenigstens eine Sulfonsäure. Beispiele für geeignete Sulfonsäuren sind Taurin, 1,1,1-Trifluoromethansulfonsäure, Tiron und Amidosulfonsäure.

Der molare Anteil von gegebenenfalls wenigstens einer in der wässrigen Beschichtungszusammensetzung (A) enthaltenen Aminopolycarbonsäure, insbesondere von als Komponente (A5) eingesetzter Aminopolycarbonsäure, ist vorzugsweise wenigstens um den Faktor 15 oder 20, besonders bevorzugt wenigstens um den Faktor 30 oder 40 oder 50 oder 60 oder 70 oder 80 oder 90 oder 100 oder 1 000 geringer als die Gesamtmenge des in der wässrigen Beschichtungszusammensetzung (A) enthaltenen Bismuts in Mol, vorzugsweise jeweils bezogen auf das Gesamtgewicht der wässrigen Zusammensetzung (A). Die Anwesenheit solcher Säuren kann gegebenenfalls zu Problemen bezüglich der Tauchbadstabilität und der Abwasserbehandlung durch eine Anreicherung dieser Verbindungen im Tauchbad führen.

### Weitere optionale Komponenten der Beschichtungszusammensetzung (A)

Die erfindungsgemäß eingesetzte wässrige Beschichtungszusammensetzung (A) kann zudem je nach erwünschter Anwendung wenigstens ein Pigment (A6) enthalten.

Vorzugsweise ist ein solches in der wässrigen Beschichtungszusammensetzung (A) enthaltenes Pigment (A6) ausgewählt aus der Gruppe bestehend aus organischen und anorganischen, farbgebenden und füllenden Pigmenten.

Das wenigstens eine Pigment (A6) kann dabei als Bestandteil der zur Herstellung der Beschichtungszusammensetzung (A) eingesetzten wässrigen Lösung oder Dispersion vorliegen, welche die Komponenten (A1) und gegebenenfalls (A2) enthält.

Alternativ kann das wenigstens eine Pigment (A6) auch in Form einer weiteren von dieser eingesetzten verschiedenen wässrigen Dispersion oder Lösung in die Beschichtungszusammensetzung (A) eingearbeitet werden. Innerhalb dieser Ausführungsform kann die entsprechende Pigment-haltige wässrige Dispersion oder Lösung zudem wenigstens ein Bindemittel enthalten. Vorzugsweise enthält eine solche Dispersion oder Lösung zudem die Komponente (A4).

Beispiele für geeignete anorganische farbgebende Pigmente (A6) sind Weißpigmente wie Zinkoxid, Zinksulfid, Titandioxid, Antimonoxid oder Lithopone; Schwarzpigmente wie Ruß, Eisen-Mangan-Schwarz oder Spinellschwarz; Buntpigmente wie Kobaltgrün oder Ultramaringrün, Kobaltblau, Ultramarinblau oder Manganblau, Ultramarinviolett oder Kobalt- und Manganviolett, Eisenoxidrot, Molybdatrot oder Ultramarinrot; Eisenoxidbraun, Mischbraun, Spinell- und Korundphasen; oder Eisenoxidgelb, Nickeltitangelb, oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Hydroxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Der Pigment-Gehalt in den wässrigen Beschichtungszusammensetzungen (A) kann je nach Verwendungszweck und nach der Natur der Pigmente (A6) variieren. Vorzugsweise liegt der Gehalt, jeweils bezogen auf das Gesamtgewicht der wässrigen Beschichtungszusammensetzung (A) im Bereich von 0,1 bis 30 Gew.-% oder im Bereich von 0,5 bis 20 Gew.-%, besonders bevorzugt im Bereich von 1,0 bis 15 Gew.-%, ganz besonders bevorzugt im Bereich von 1,5 bis 10 Gew.-% und insbesondere im Bereich von 2,0 bis 5,0 Gew.-% oder im Bereich von 2,0 bis 4,0 Gew.-% oder im Bereich von 2,0 bis 3,5 Gew.-%.

Die Beschichtungszusammensetzung (A) kann je nach erwünschter Anwendung ein oder mehrere üblicherweise eingesetzte Additive (A7) enthalten. Vorzugsweise sind diese Additive (A7) ausgewählt aus der Gruppe bestehend aus Benetzungsmitteln, Emulgatoren, welche vorzugsweise die Komponente (A8) nicht beinhalten, Dispergiermitteln, oberflächen-aktiven Verbindungen wie Tensiden, Verlaufshilfsmitteln, Löslichkeitsvermittlern, Entschäumungsmitteln, Rheologiehilfsmitteln, Antioxidantien, Stabilisierungsmitteln, Kristallisationsinhibitoren, vorzugsweise Hitze-Stabilisatoren, Prozess-Stabilisatoren und UV- und/oder Licht-Stabilisatoren, Katalysatoren, Füllstoffen, Wachsen, Flexibilisierungsmitten, Weichmachern und Gemischen aus den vorstehend genannten Additiven. Der Additiv-Gehalt kann je nach Verwendungszweck sehr breit variieren. Vorzugsweise liegt der Gehalt, bezogen auf das Gesamtgewicht der wässrigen Beschichtungszusammensetzung (A), bei 0,1 bis 20,0 Gew.-%, bevorzugt bei 0,1 bis 15,0 Gew.-%, besonders bevorzugt bei 0,1 bis 10,0 Gew.-%, ganz besonders bevorzugt bei 0,1 bis 5,0 Gew.-% und insbesondere bei 0,1 bis 2,5 Gew.-%.

Das wenigstens eine Additiv (A7) kann dabei als Bestandteil der zur Herstellung der Beschichtungszusammensetzung (A) eingesetzten wässrigen Lösung oder Dispersion vorliegen, welche die Komponenten (A1) und gegebenenfalls (A2) enthält.

Alternativ kann das wenigstens eine Additiv (A7) auch in Form einer weiteren von dieser eingesetzten verschiedenen wässrigen Dispersion oder Lösung in die Beschichtungszusammensetzung (A) eingearbeitet werden, beispielsweise innerhalb einer wässrigen Dispersion oder Lösung, die wenigstens ein Pigment (A6) und gegebenenfalls zudem wenigstens ein Bindemittel enthält und gegebenenfalls zudem (A4) enthält.

In einer bevorzugten Ausführungsform ist die erfindungsgemäß eingesetzte Beschichtungszusammensetzung (A) eine kathodisch abscheidbare Miniemulsion, welche wenigstens einen kationischen Emulgator (A8) umfasst. Der Begriff "Miniemulsion" ist dem Fachmann bekannt, beispielsweise aus I.M. Grabs et al., Macromol. Symp. 2009, 275-276, Seiten 133-141. Eine Miniemulsion ist demnach eine Emulsion, deren Teilchen eine mittlere Teilchengröße im Bereich von 5 bis 500 nm aufweisen. Methoden zur Bestimmung der mittleren Teilchengröße solcher Teilchen sind dem Fachmann bekannt. Vorzugsweise erfolgt eine solche Bestimmung der mittleren Teilchengröße mittels dynamischer Lichtstreuung gemäß DIN ISO 13321 (Datum: 1.10.2004). Derartige Miniemulsionen sind beispielsweise aus WO 82/00148 A1 bekannt. Bei dem wenigstens einen kationischen Emulgator handelt es sich vorzugsweis um einen Emulgator, welcher einen HLB-Wert von ≥ 8 aufweist, welcher vorzugsweise gemäß der dem Fachmann bekannten Methode von Griffin bestimmt wird. Der Emulgator kann reaktive funktionelle Gruppen aufweisen. Als solche reaktiven funktionellen Gruppen kommen die gleichen reaktiven funktionellen Gruppen in Betracht, die auch das Bindemittel (A1) aufweisen kann. Vorzugsweise weist der Emulgator eine hydrophile Kopfgruppe auf, welche vorzugsweise ein quaternäres Stickstoffatom aufweist, an das vier organische vorzugsweise aliphatische Reste wie beispielsweise organische Reste mit 1-10 Kohlenstoffatomen gebunden sind, und eine lipophile Schwanzgruppe. Wenigstens einer dieser organischen Reste weist dabei vorzugsweise eine Hydroxyl-Gruppe auf.

### Optionale in (A) enthaltene weitere Metall-Ionen

Der molare Anteil von gegebenenfalls in der wässrigen Beschichtungszusammensetzung (A) enthaltenen Zirkonium-Ionen ist vorzugsweise wenigstens um den Faktor 100, vorzugsweise wenigstens um den Faktor 200, ganz besonders bevorzugt wenigstens um den Faktor 300 oder 400 oder 500 oder 600 oder 700 oder 800 oder 900 oder 1 000 geringer als die Gesamtmenge des in der wässrigen Beschichtungszusammensetzung (A) enthaltenen Bismuts in Mol, vorzugsweise jeweils bezogen auf das Gesamtgewicht der wässrigen Zusammensetzung (A). Die Beschichtungszusammensetzung (A) enthält insbesondere bevorzugt keine Zirkonium-Ionen.

Üblicherweise in Beschichtungszusammensetzungen zur Verbesserung des Korrosionsschutzes eingesetzte Zirkonium-Verbindungen werden oftmals in Form von Salzen oder Säuren eingesetzt, die Zirkonium-Ionen, insbesondere [ZrF₆]²⁻-Ionen enthalten. Der Einsatz solcher [ZrF₆]²⁻-Ionen führt bei gleichzeitiger Anwesenheit von Bismut-Ionen jedoch zur Ausfällung von Bismutfluorid. Daher soll der Einsatz von Zirkonium-Verbindungen in der Beschichtungszusammensetzung (A) vermieden werden.

Vorzugsweise ist zudem der molare Anteil von gegebenenfalls in der wässrigen Beschichtungszusammensetzung (A) enthaltenen Ionen ausgewählt aus der Gruppe bestehend aus Ionen von Metallen der Seltenen Erden wenigstens um den Faktor 100, ganz besonders bevorzugt wenigstens um den Faktor 200 oder 300 oder 400 oder 500 oder 600 oder 700 oder 800 oder 900 oder 1 000 geringer als die Gesamtmenge des in der wässrigen Beschichtungszusammensetzung (A) enthaltenen Bismuts in Mol, vorzugsweise jeweils bezogen auf das Gesamtgewicht der wässrigen Zusammensetzung (A). Insbesondere enthält die Beschichtungszusammensetzung (A) keine Ionen von Metallen der Seltenen Erden. Die Anwesenheit solcher Ionen führt zu einer Verteuerung des erfindungsgemäßen Verfahrens und erschwert die Abwasserbehandlung. Vorzugsweise sind solche Ionen von Metallen der Seltenen Erden ausgewählt aus der Gruppe bestehend aus Ionen von Sc, Y, La, Ce, Pr, Nd, Pm, Sm, Eu, Gb, Td, Dy, Ho, Er, Tm, Yb und Lu.

### Amin-blockierte Verbindung

Die erfindungsgemäße Beschichtungszusammensetzung (A) enthält wenigstens eine phosphorhaltige Verbindung (P), welche mit wenigstens einem Amin der allgemeinen Formel (I) blockiert ist, 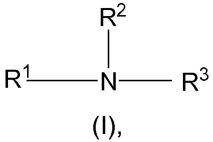 in der
R¹ und R² jeweils unabhängig voneinander für einen C₁₋₁₈-aliphatischen Rest, für einen C₃₋₁₂-cycloaliphatischen Rest, für einen über eine C₁₋₁₀-aliphatische Gruppe verbrückten C₃₋₁₂-cycloaliphatischen Rest oder für einen über eine C₁₋₁₀-aliphatische Gruppe verbrückten Aryl- oder Heteroaryl-Rest stehen, vorzugsweise jeweils unabhängig voneinander für einen C₁₋₁₈-aliphatischen Rest oder für einen über eine C₁₋₁₀-aliphatische Gruppe verbrückten Aryl- oder Heteroaryl-Rest stehen, und
R³ für H, einen C₁₋₁₈-aliphatischen Rest, einen C₃₋₁₂-cycloaliphatischen Rest, einen über eine C₁₋₁₀-aliphatische Gruppe verbrückten C₃₋₁₂-cycloaliphatischen Rest oder für einen über eine C₁₋₁₀-aliphatische Gruppe verbrückten Aryl- oder Heteroaryl-Rest steht, vorzugsweise für H, einen C₁₋₁₈-aliphatischen Rest oder für einen über eine C₁₋₁₀-aliphatische Gruppe verbrückten Aryl- oder Heteroaryl-Rest steht.

Die Verbindung (P) ist per se phosphorhaltig, d.h. enthält wenigstens ein Phosphoratom. Die mit wenigstens einem Amin der allgemeinen Formel (I) blockierte Verbindung (P) ist somit insgesamt phosphor- und stickstoffhaltig. Es können auch Mischungen aus zwei oder mehreren verschiedenen Verbindungen (P) eingesetzt werden, die jeweils unabhängig voneinander mit dem gleichen oder einem unterschiedlichen Amin der allgemeinen Formel (I) blockiert sind.

Phosphorhaltige Verbindungen (P), die zur Herstellung der erfindungsgemäßen Beschichtungszusammensetzung eingesetzt und einer Amin-Blockierung unterworfen werden können, sowie Methoden zu deren Herstellung sind dem Fachmann bekannt, beispielsweise aus DE 10 2005 045 228 A1. Entsprechende Amin-blockierte phosphorhaltige Verbindungen (P) sowie deren Herstellung sind dem Fachmann beispielsweise aus WO 2011/029502 A1 und WO 2010/063332 A1 bekannt.

Vorzugsweise ist die phosphorhaltige Verbindung (P) ausgewählt aus der Gruppe bestehend aus Phosphonsäurediestern, Diphosphonsäurediestern, Phosphorsäuremonoestern und Phosphorsäurediestern, deren Anionen sowie Mischungen davon. Die jeweiligen organischen Reste dieser Verbindungen können jeweils acyclisch oder cyclisch sein oder eine Kombination aus acyclischen und cyclischen organischen Gruppen aufweisen.

Besonders bevorzugt wird als phosphorhaltige Verbindung (P) eine Verbindung der nachstehenden allgemeinen Formel (II) oder ein Anion davon eingesetzt, 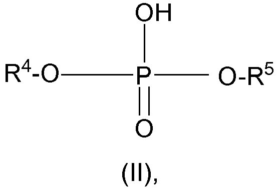 in der
R⁴ und R⁵ jeweils unabhängig voneinander ausgewählt sind aus der Gruppe bestehend aus
wenigstens einfach substituierten und unsubstituierten, vorzugsweise unsubstituierten, (Hetero)Alkyl-Resten mit 1 bis 20, vorzugsweise 2 bis 16 und insbesondere 2 bis 10 Kohlenstoffatomen und gegebenenfalls 1 bis 4 Heteroatomen ausgewählt aus der Gruppe bestehend aus N, NH, N(C₁₋₆-Alkyl), O und S, wenigstens einfach substituierten und unsubstituierten, vorzugsweise unsubstituierten, (Hetero)Cycloalkyl-Resten mit 3 bis 20, vorzugsweise 3 bis 16 und insbesondere 3 bis 10 Kohlenstoffatomen und gegebenenfalls 1 bis 4 Heteroatomen ausgewählt aus der Gruppe bestehend aus N, NH, N(C₁₋₆-Alkyl), O und S, und wenigstens einfach substituierten und unsubstituierten, vorzugsweise unsubstituierten, (Hetero)Aryl-Resten mit 5 bis 20, vorzugsweise 6 bis 14 und insbesondere 6 bis 10 Kohlenstoffatomen, und gegebenenfalls 1 bis 4 Heteroatomen ausgewählt aus der Gruppe bestehend aus N, NH, N(C₁₋₆-Alkyl), O und S,
wenigstens einfach substituierten und unsubstituierten (Hetero)Alkyl(hetero)aryl-, (Hetero)Aryl(hetero)alkyl-, (Hetero)Alkyl(hetero)-cycloalkyl-, (Hetero)Cycloalkyl(hetero)alkyl-, (Hetero)Aryl(hetero)cycloalkyl-, (Hetero)Cycloalkyl(hetero)aryl-, (Hetero)Alkyl(hetero)cycloalkyl(hetero)aryl-, (Hetero)Alkyl(hetero)aryl(hetero)cycloalkyl-, (Hetero)Aryl(hetero)cycloalkyl-(hetero)alkyl-, (Hetero)Aryl(hetero)alkyl(hetero)cycloalkyl-, (Hetero)Cycloalkyl-(hetero)alkyl(hetero)aryl- und (Hetero)Cycloalkyl(hetero)aryl(hetero)alkyl-Resten, wobei die hierin enthalten (Hetero)Alkyl-, (Hetero)Cycloalkyl- und (Hetero)Aryl-Gruppen jeweils die im vorstehenden Absatz aufgeführte Anzahl von Kohlenstoffatomen und gegebenenfalls Heteroatomen enthalten,
und einer der Reste R⁴ und R⁵ oder beide Reste R⁴ und R⁵ zusätzlich auch Wasserstoff darstellen kann/können (Teilveresterung).

Ganz besonders bevorzugt wird als phosphorhaltige Verbindung (P) eine Verbindung der allgemeinen Formel (II) eingesetzt,
in der
R⁴ und R⁵ jeweils unabhängig voneinander ausgewählt sind aus der Gruppe bestehend aus
wenigstens einfach substituierten und unsubstituierten, vorzugsweise unsubstituierten, (Hetero)Alkyl-Resten mit 1 bis 20, vorzugsweise 2 bis 16 und insbesondere 2 bis 10 Kohlenstoffatomen und gegebenenfalls 1 bis 4 Heteroatomen ausgewählt aus der Gruppe bestehend aus N, NH, N(C₁₋₆-Alkyl), O und S, wenigstens einfach substituierten und unsubstituierten, vorzugsweise unsubstituierten, (Hetero)Cycloalkyl-Resten mit 3 bis 20, vorzugsweise 3 bis 16 und insbesondere 3 bis 10 Kohlenstoffatomen und gegebenenfalls 1 bis 4 Heteroatomen ausgewählt aus der Gruppe bestehend aus N, NH, N(C₁₋₆-Alkyl), O und S, und wenigstens einfach substituierten und unsubstituierten, vorzugsweise unsubstituierten, (Hetero)Aryl-Resten mit 5 bis 20, vorzugsweise 6 bis 14 und insbesondere 6 bis 10 Kohlenstoffatomen, und gegebenenfalls 1 bis 4 Heteroatomen ausgewählt aus der Gruppe bestehend aus N, NH, N(C₁₋₆-Alkyl), O und S,
und einer der Reste R⁴ und R⁵ oder beide Reste R⁴ und R⁵ zusätzlich auch Wasserstoff darstellen kann/können (Teilveresterung).

(Hetero)alkyl-Reste beinhalten Alkyl-Reste und Heteroalkyl-Reste, vorzugsweise Alkyl-Reste, (Hetero)cycloalkyl-Reste beinhalten Cycloalkyl-Reste und Heterocycloalkyl-Reste, vorzugsweise Cycloalkyl-Reste und (Hetero)aryl-Reste beinhalten Aryl-Reste und Heteroaryl-Reste, vorzugsweise Aryl-Reste.

Insbesondere wird als phosphorhaltige Verbindung (P) wenigstens ein Phosphorsäuremonoalkylester, und/oder wenigstens ein Phosphorsäuredialkylester eingesetzt, wobei der oder die Alkyl-Reste dabei jeweils unabhängig voneinander vorzugsweise 1 bis 18 Kohlenstoffatome aufweist/aufweisen. Auch der Einsatz von Phosphorsäurephenylester ist bevorzugt.

Die phosphorhaltige Verbindung (P) ist mit wenigstens einem Amin der allgemeinen Formel (I) blockiert, in der
R¹ und R² jeweils unabhängig voneinander für einen C₁₋₁₈-aliphatischen Rest, für einen C₃₋₁₂-cycloaliphatischen Rest, für einen über eine C₁₋₁₀-aliphatische Gruppe verbrückten C₃₋₁₂-cycloaliphatischen Rest oder für einen über eine C₁₋₁₀-aliphatische Gruppe verbrückten Aryl- oder Heteroaryl-Rest stehen, vorzugsweise jeweils unabhängig voneinander für einen C₁₋₁₈-aliphatischen Rest oder für einen über eine C₁₋₁₀-aliphatische Gruppe verbrückten Aryl- oder Heteroaryl-Rest stehen, und
R³ für H, einen C₁₋₁₈-aliphatischen Rest, einen C₃₋₁₂-cycloaliphatischen Rest, einen über eine C₁₋₁₀-aliphatische Gruppe verbrückten C₃₋₁₂-cycloaliphatischen Rest oder für einen über eine C₁₋₁₀-aliphatische Gruppe verbrückten Aryl- oder Heteroaryl-Rest steht, vorzugsweise für H, einen C₁₋₁₈-aliphatischen Rest oder für einen über eine C₁₋₁₀-aliphatische Gruppe verbrückten Aryl- oder Heteroaryl-Rest steht.

Der Ausdruck "C₁₋₁₈-aliphatischer Rest" umfasst im Sinne dieser Erfindung vorzugsweise acyclische gesättigte oder ungesättigte, vorzugsweise gesättigte, aliphatische Kohlenwasserstoffreste, d.h. C₁₋₆-aliphatische Reste, die jeweils verzweigt oder unverzweigt, vorzugsweise verzweigt, sowie unsubstituiert oder gegebenenfalls wenigstens einfach, beispielsweise zweifach oder dreifach, substituiert sind, vorzugsweise aber unsubstituiert sind, mit 1 bis 18, d.h. 1, 2, 3, 4, 5, 6, 7, 8, 9, 10, 11, 12, 13, 14, 15, 16, 17 oder 18, Kohlenstoffatomen, d.h. C₁₋₁₈-Alkanyle, C₂₋₁₈-Alkenyle und C₂₋₁₈-Alkinyle. Dabei weisen Alkenyle mindestens eine C-C-Doppelbindung und Alkinyle mindestens eine C-C-Dreifachbindung auf. Besonders bevorzugt ist ein C₁₋₁₈-aliphatischer Rest ein C₁₋₁₈-Alkanyl, d.h. ein C₁₋₁₈-Alkyl. Ganz besonders bevorzugt ist ein C₁₋₁₈-aliphatischer Rest ein C₂₋₁₈-aliphatischer Rest und insbesondere ein C₃₋₁₈-aliphatischer Rest oder ein C₄₋₁₈-aliphatischer Rest oder ein C₅₋₁₈-aliphatischer Rest oder ein C₆₋₁₈-aliphatischer Rest. Bevorzugt ist ein C₁₋₁₈-aliphatischer Rest aus der Gruppe ausgewählt, die Methyl, Ethyl, n-Propyl, 2-Propyl, n-Butyl, iso-Butyl, sec.-Butyl, tert.-Butyl, n-Pentyl, isoPentyl, neo-Pentyl und n-Hexyl, 2-ethylhexyl, n-Heptyl, n-Octyl, n-Nonyl, iso-Nonyl, n-Decyl, iso-Decyl, n-Undecyl, n-Dodecyl, sowie iso-Dodecyl umfasst.

Der Ausdruck "C₃₋₁₂-cycloaliphatischer Rest" umfasst im Sinne dieser Erfindung vorzugsweise cyclische gesättigte oder ungesättigte, vorzugsweise gesättigte, cycloaliphatische Kohlenwasserstoffreste, d.h. C₃₋₁₂-cycloaliphatische Reste, die unsubstituiert oder gegebenenfalls wenigstens einfach, beispielsweise zweifach oder dreifach, substituiert sind, vorzugsweise aber unsubstituiert sind, mit 3 bis 12, d.h. 3, 4, 5, 6, 7, 8, 9, 10, 11 oder 12 Kohlenstoffatomen, d.h. C₃₋₁₂-Cycloalkanyle und C₃₋₁₂-Cycloalkenyle. Dabei weisen Cycloalkenyle mindestens eine C-C-Doppelbindung auf. Besonders bevorzugt ist ein C₃₋₁₂-cycloaliphatischer Rest ein C₃₋₁₂-Cycloalkanyl, d.h. ein C₃₋₁₂-Cycloalkyl. Ganz besonders bevorzugt ist ein C₃₋₁₂-cycloaliphatischer Rest ein C₃₋₁₂-cycloaliphatischer Rest und insbesondere ein C₅₋₆-cyloaliphatischer Rest. Bevorzugt ist ein C₃₋₁₂-cycloaliphatischer Rest aus der Gruppe ausgewählt, die Cyclopropyl, Cyclobutyl, Cyclopentyl und Cyclohexyl umfasst.

Bevorzugte Aryl-Reste sind C₆₋₁₅-aromatische Reste, insbesondere gegebenenfalls mit wenigstens einem C₁₋₆-aliphatischen Rest substituierte Phenyl-Reste. Bevorzugte Heteroaryl-Reste sind C₄₋₁₅-heteroaromatische Reste, die wenigstens ein Heteroatom wie N, S und/oder O und/oder wenigstens eine Heteroatomgruppe wie N(C₁₋₆-Alkyl) und/oder NH aufweisen, insbesondere gegebenenfalls mit wenigstens einem C₁₋₆ aliphatischen Rest substituierte Pyridyl-Reste.

Der Ausdruck "über eine C₁₋₁₀-aliphatische Gruppe verbrücktes Aryl oder Heteroaryl", bedeutet im Sinne der vorliegenden Erfindung vorzugsweise, dass der Aryl- bzw. Heteroaryl-Rest bzw. der C₃₋₁₂-cycloaliphatische Rest über eine C₁₋₁₀-aliphatische Gruppe an die jeweilige übergeordnete allgemeine Struktur gebunden ist. Vorzugsweise ist die C₁₋₁₀-aliphatische Gruppe eine C₁₋₁₀-Alkylen-Gruppe. Die C₁₋₁₀-aliphatische Gruppe kann dabei verzweigt oder unverzweigt und gesättigt oder ungesättigt sein. Vorzugsweise ist die C₁₋₁₀-aliphatische Gruppe ausgewählt aus der Gruppe umfassend -CH₂-, -CH₂-CH₂-, -CH(CH₃)-, -CH₂-CH₂-CH₂-, -CH(CH₃)-CH₂-, -CH(CH₂CH₃)-, -CH₂-(CH₂)₂-CH₂-, -CH(CH₃)-CH₂-CH₂-, -CH₂-CH(CH₃)-CH₂-, -CH(CH₃)-CH(CH₃)-, -CH(CH₂CH₃)-CH₂-, -C(CH₃)₂-CH₂-, -CH(CH₂CH₂CH₃)-, -C(CH₃)(CH₂CH₃)-, -CH₂-(CH₂)₃-CH₂-, -CH(CH₃)-CH₂-CH₂-CH₂-, -CH₂-CH(CH₃)-CH₂-CH₂-, -CH(CH₃)-CH₂-CH(CH₃)-, -CH(CH₃)-CH(CH₃)-CH₂-, -C(CH₃)₂-CH₂-CH₂-, -CH₂-C(CH₃)₂-CH₂-, -CH(CH₂CH₃)-CH₂-CH₂-, -CH₂-CH(CH₂CH₃)-CH₂-, -C(CH₃)₂-CH(CH₃)-, -CH(CH₂CH₃)-CH(CH₃)-, -C(CH₃)(CH₂CH₃)-CH₂-, -CH(CH₂CH₂CH₃)-CH₂-, -C(CH₂CH₂CH₃)-CH₂-, -CH(CH₂CH₂CH₂CH₃)-, -C(CH₃)(CH₂CH₂CH₃)-, -C(CH₂CH₃)₂-, und -CH₂-(CH₂)₄-CH₂-.

Vorzugsweise steht bzw. stehen wenigstens einer, besonders bevorzugt wenigstens zwei und insbesondere alle drei der Reste R¹, R² und R³ jeweils unabhängig voneinander für einen C₁₋₁₈-aliphatischen oder einen C₃₋₁₈-aliphatischer Rest oder einen C₄₋₁₈-aliphatischer Rest oder einen C₅₋₁₈-aliphatischer Rest oder einen C₆₋₁₈-aliphatischer Rest. Besonders bevorzugt steht bzw. stehen wenigstens einer, besonders bevorzugt wenigstens zwei und insbesondere alle drei der Reste R¹, R² und R³ jeweils unabhängig voneinander für einen C₁₋₁₈-Alkyl-Rest oder einen C₃₋₁₈-Alkyl-Rest oder einen C₄₋₁₈-Alkyl-Rest oder einen C₅₋₁₈-Alkyl-Rest oder einen C₆₋₁₈-Alkyl-Rest. Ganz besonders bevorzugt steht bzw. stehen wenigstens einer, besonders bevorzugt wenigstens zwei und insbesondere alle drei der Reste R¹, R² und R³ jeweils unabhängig voneinander für einen C₆₋₁₈-Alkyl-Rest. Besonders bevorzugt handelt es sich bei den vorstehend genannten aliphatischen Resten und Alkyl-Resten jeweils um verzweigte oder unverzweigte, insbesondere um verzweigte, entsprechende Reste.

Vorzugsweise steht R³ für einen C₁₋₁₈-aliphatischen Rest oder für einen über eine C₁₋₁₀-aliphatische Gruppe verbrückten Aryl- oder Heteroaryl-Rest, d.h. bei dem Amin der allgemeinen Formel (I) handelt es sich um ein tertiäres Amin.

Beispiele für geeignete Amine der allgemeinen Formel (I), mit welchem die phosphorhaltige Verbindung (P) blockiert werden kann, sind unverzweigte aliphatische Amine, in denen R¹ und R² jeweils für einen unverzweigten C₁₋₁₈-aliphatischen Rest stehen wie Trioctylamin, Dioctylamin, Octyldimethylamin, Dinonylamin, Trinonylamin, Nonyldimethylamin, Tridodecylamin und Dodecyldimethylamin. Beispiele für geeignete Amine der allgemeinen Formel (I), mit welchem die phosphorhaltige Verbindung (P) blockiert werden kann, sind verzweigte aliphatische Amine, in denen R¹ und R² oder einer der Reste R¹ und R² jeweils für einen verzweigten C₁₋₁₈-aliphatischen Rest stehen/steht, wie Di-(isopropanol)amin, Diisoamylamin, Diisobutylamin, Diisononylamin, Dodecyldimethylamin Isododecyldimethyl-amin, Tris-(2-ethylhexyl)amin, Triisoamylamin, Triisononylamin, Triisooctylamin und Triisopropylamin. Ganz besonders bevorzugt ist Tris(2-ethylhexyl)amin.

Erfindungsgemäß eingesetzte mit wenigstens einem Amin der allgemeinen Formel (I) blockierte phosphorhaltige Verbindungen (P) sind kommerziell erhältlich, z.B. als Nacure®-Typen der Firma King Industries.

Vorzugsweise enthält die erfindungsgemäße Beschichtungszusammensetzung (A) die wenigstens eine mit wenigstens einem Amin der allgemeinen Formel (I) blockierte phosphorhaltige Verbindung (P) in einer Menge in einem Bereich von 0,05 bis 5 Gew.-% oder in einem Bereich von 0,1 bis 5 Gew.-%, besonders bevorzugt in einem Bereich von 0,1 bis 4 Gew.-% oder in einem Bereich von 0,1 bis 3 Gew.-%, ganz besonders bevorzugt in einem Bereich von 0,2 bis 2,5 Gew.-%, insbesondere in einem Bereich von 0,2 bis 2 Gew.-% oder in einem Bereich von 0,3 bis 2 Gew.-% oder in einem Bereich von 0,5 bis 1,5 Gew.-%, jeweils bezogen auf das Gesamtgewicht der Beschichtungszusammensetzung (A).

Vorzugsweise liegt das relative Gewichtsverhältnis der wenigstens einen mit wenigstens einem Amin der allgemeinen Formel (I) blockierten phosphorhaltigen Verbindung (P) zu der Gesamtmenge an Bismut in der Beschichtungszusammensetzung (A) in einem Bereich von 1:6 bis 1:1, besonders bevorzugt in einem Bereich von 1:5 bis 1:1,5, ganz besonders bevorzugt in einem Bereich von 1:4 bis 1:2.

Die erfindungsgemäße Beschichtungszusammensetzung (A) kann gegebenenfalls als Additiv (A7) wenigstens einen Kristallisationsinhibitor enthalten, der ein Ausfällen der mit wenigstens einem Amin der allgemeinen Formel (I) blockierten Verbindung (P) verhindert.

Es ist erfindungsgemäß möglich, die phosphorhaltige Verbindung (P) nicht nur mit nur einem Amin der allgemeinen Formel (I) zu blockieren, sondern zur Blockierung eine Mischung aus wenigstens zwei verschiedenen Aminen der allgemeinen Formel (I) oder eine Mischung aus mindestens einem Amin der allgemeinen Formel (I) und wenigstens einem weiteren davon verschiedenen Amin zu verwenden, welches nicht zwingend unter die allgemeine Formel (I) fallen muss. So können beispielsweise Mischungen von sekundären oder tertiären Aminen der allgemeinen Formel (I) mit jeweils unverzweigten C₁₋₁₈-aliphatischen Resten R¹, R² und/ oder R³ und sekundären oder tertiären Aminen der allgemeinen Formel (I) mit mindestens einem verzweigten C₁₋₁₈-aliphatischen Rest R¹, R² und/oder R³ eingesetzt werden. Der Einsatz geeigneter Mischungen kann ebenfalls einer möglichen Kristallisation vorbeugen. Insbesondere das Amin der allgemeinen Formel (I), welches wenigstens einen verzweigten C₁₋₁₈-aliphatischen Rest aufweist, wirkt dann vorzugsweise als Kristallisationsinhibitor. Beispiele für geeignete weitere Amine, die nicht unter die allgemeine Formel (I) fallen, aber zusätzlich in der erfindungsgemäßen Beschichtungszusammensetzung (A) enthalten sein können, sind beispielsweise bicyclische Amine, insbesondere ungesättigte bicyclische Amine wie 1,5-Diazabicyclo[4.3.0]non-5-en und/oder 1,8-Diazabicyclo[5.4.0]-undec-7-en.

### Verfahren zur Herstellung der Beschichtungszusammensetzung (A)

Ein weiterer Gegenstand der vorliegenden Erfindung ist ein Verfahren zur Herstellung der wässrigen erfindungsgemäßen Beschichtungszusammensetzung (A) dadurch gekennzeichnet, dass das Verfahren wenigstens den Schritt (0) umfasst, nämlich
(0) zumindest teilweises, vorzugsweise vollständiges, Überführen wenigstens einer in Wasser unlöslichen Bismut-Verbindung, besonders bevorzugt wenigstens einer Verbindung ausgewählt aus der Gruppe bestehend aus Oxiden, basischen Oxiden, Hydroxiden, Carbonaten, Nitraten, basischen Nitraten, Salicylaten und basischen Salicylaten des Bismuts sowie Mischungen davon, durch zumindest teilweise, vorzugsweise vollständige Umsetzung von dieser Verbindung mit wenigstens einem zur Komplexierung von Bismut geeigneten wenigstens zweizähnigen Komplexierungsmittel (A5) in wenigstens eine in Wasser lösliche Bismut-Verbindung (A3) in Wasser, gegebenenfalls in Gegenwart wenigstens einer der Komponenten (A6) bis (A8) und gegebenenfalls (A1) und/oder (A2) und/oder (B), unter Erhalt einer wenigstens die Komponenten (A3) und (A5), gegebenenfalls (A4) sowie gegebenenfalls (A1) und/oder (A2) und/oder mit wenigstens einem Amin der allgemeinen Formel (I) blockierten (P) und/oder wenigstens einer der Komponenten (A6) bis (A8) der Beschichtungszusammensetzung (A) enthaltenen Mischung.

Vorzugsweise ist die in Wasser unlösliche Bismut-Verbindung Bestandteil einer Pigmentpaste, welche wenigstens ein Pigment (A6) enthält.

Gegebenenfalls umfasst das erfindungsgemäße Verfahren nach Durchführung von Schritt (0) wenigstens einen weiteren Schritt, nämlich ein
Mischen der nach Durchführung von Schritt (0) erhaltenen Mischung wenigstens mit der Komponente (A1) und gegebenenfalls der Komponente (A2) sowie mit wenigstens einem Amin der allgemeinen Formel (I) blockierten (P), gegebenenfalls wenigstens einer der Komponenten (A6) bis (A8) unter Erhalt der Beschichtungszusammensetzung (A).

Vorzugsweise beträgt die Dauer des Schritts (0) wenigstens 2 oder wenigstens 4 oder wenigstens 6 oder wenigstens 8 oder wenigstens 10 oder wenigstens 12 oder wenigstens 14 oder wenigstens 16 oder wenigstens 18 oder wenigstens 20 oder wenigstens 22 oder wenigstens 24 Stunden. Schritt (0) wird vorzugsweise unter Rühren bei einer Temperatur im Bereich von 18 bis 23°C durchgeführt.

Alle im Zusammenhang mit der erfindungsgemäßen wässrigen Beschichtungszusammensetzung (A) hierin zuvor beschriebenen bevorzugten Ausführungsformen sind auch bevorzugte Ausführungsformen der erfindungsgemäß eingesetzten wässrigen Beschichtungszusammensetzung (A) hinsichtlich ihrer Herstellung.

### Verwendung der Beschichtungszusammensetzung (A)

Ein weiterer Gegenstand der vorliegenden Erfindung ist eine Verwendung der erfindungsgemäßen Beschichtungszusammensetzung (A) oder der in dem erfindungsgemäßen Verfahren zur zumindest teilweisen Beschichtung eines elektrisch leitfähigen Substrats mit einem Elektrotauchlack eingesetzten wässrigen Beschichtungszusammensetzung (A) zur zumindest teilweisen Beschichtung eines elektrisch leitfähigen Substrats mit einem Elektrotauchlack.

Alle im Zusammenhang mit der erfindungsgemäßen wässrigen Beschichtungszusammensetzung (A) hierin zuvor beschriebenen bevorzugten Ausführungsformen sind auch bevorzugte Ausführungsformen der erfindungsgemäß eingesetzten wässrigen Beschichtungszusammensetzung (A) hinsichtlich ihrer Verwendung zur zumindest teilweisen Beschichtung eines elektrisch leitfähigen Substrats mit einem Elektrotauchlack.

### Verfahren zur zumindest teilweisen Beschichtung eines elektrisch leitfähigen Substrats mit der Beschichtungszusammensetzung (A)

Ein weiterer Gegenstand der vorliegenden Erfindung ist ein Verfahren zur zumindest teilweisen Beschichtung eines elektrisch leitfähigen Substrats mit einem Elektrotauchlack umfassend wenigstens einen Schritt (1),
(1) Kontaktieren des als Kathode geschalteten elektrisch leitfähigen Substrats mit der erfindungsgemäßen wässrigen Beschichtungszusammensetzung (A),
insbesondere wenn als Substrat Aluminium oder ein Substrat eingesetzt wird, welches zumindest eine Aluminium-Oberfläche aufweist.

In einer bevorzugten Ausführungsform ist das erfindungsgemäße Verfahren ein Verfahren zur zumindest teilweisen Beschichtung eines elektrisch leitfähigen Substrats mit einem Elektrotauchlack umfassend wenigstens einen Schritt (1),
(1) Kontaktieren des als Kathode geschalteten elektrisch leitfähigen Substrats mit der erfindungsgemäßen wässrigen Beschichtungszusammensetzung (A),
   wobei Schritt (1) in wenigstens zwei aufeinanderfolgenden Stufen (1a) und (1b) durchgeführt wird, nämlich
   (1a) bei einer angelegten Spannung in einem Bereich von 1 bis 50 V, welche vorzugsweise über eine Dauer von wenigstens 5 Sekunden angelegt wird, und
   (1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung,

Alle im Zusammenhang mit der erfindungsgemäßen wässrigen Beschichtungszusammensetzung (A) hierin zuvor beschriebenen bevorzugten Ausführungsformen sind auch bevorzugte Ausführungsformen der erfindungsgemäß eingesetzten wässrigen Beschichtungszusammensetzung (A) hinsichtlich ihres Einsatzes in Schritt (1) des erfindungsgemäßen Verfahrens zur zumindest teilweisen Beschichtung eines elektrisch leitfähigen Substrats mit einem Elektrotauchlack.

### Schritt (1)

Das erfindungsgemäße Verfahren zur zumindest teilweisen Beschichtung eines elektrisch leitfähigen Substrats mit einem Elektrotauchlack umfasst wenigstens einen Schritt (1), nämlich ein Kontaktieren des als Kathode geschalteten elektrisch leitfähigen Substrats mit der wässrigen Beschichtungszusammensetzung (A).

Unter dem Begriff "Kontaktierung" bzw. "Kontaktieren" im Sinne der vorliegenden Erfindung wird vorzugsweise ein Eintauchen des mit der Beschichtungszusammensetzung (A) zumindest teilweise zu beschichtenden Substrats in die eingesetzte wässrige Beschichtungszusammensetzung (A), ein Besprühen oder Bespritzen des mit der Beschichtungszusammensetzung (A) zumindest teilweise zu beschichtenden Substrats oder ein Aufwalzen des mit der Beschichtungszusammensetzung (A) zumindest teilweise zu beschichtenden Substrats auf das Substrat verstanden. Insbesondere wird unter dem Begriff "Kontaktierung" bzw. "Kontaktieren" im Sinne der vorliegenden Erfindung ein Eintauchen des mit der Beschichtungszusammensetzung (A) zumindest teilweise zu beschichtenden Substrats in die eingesetzte wässrige Beschichtungszusammensetzung (A), verstanden.

Vorzugsweise ist das erfindungsgemäße Verfahren ein Verfahren zur zumindest teilweisen Beschichtung eines im und/oder für den Automobilbau eingesetzten elektrisch leitfähigen Substrats. Das Verfahren kann kontinuierlich in Form einer Bandbeschichtung wie beispielsweise im Coil-Coating-Verfahren oder diskontinuierlich erfolgen.

Mittels Schritt (1) des erfindungsgemäßen Verfahrens erfolgt eine zumindest teilweise Beschichtung des Substrats mit der erfindungsgemäßen wässrigen Beschichtungszusammensetzung (A) durch eine kataphoretische Abscheidung dieser Beschichtungszusammensetzung auf der Substratoberfläche.

Schritt (1) erfolgt mittels Anlegen einer elektrischen Spannung zwischen dem Substrat und wenigstens einer Gegenelektrode. Schritt (1) des erfindungsgemäßen Verfahrens wird vorzugsweise in einem Tauchlackbad durchgeführt. Die Gegenelektrode kann sich dabei in dem Tauchlackbad befinden. Alternativ oder zusätzlich kann die Gegenelektrode auch vom Tauchlackbad separiert vorliegen, beispielsweise über eine für Anionen permeable Anionenaustauscher-Membran. Dabei können Anionen, die während der Tauchlackierung gebildet werden, aus dem Lack durch die Membran in das Anolyt abtransportiert werden, wodurch der pH-Wert im Tauchlackbad reguliert bzw. konstant gehalten werden kann. Vorzugsweise liegt die Gegenelektrode vom Tauchlackbad separiert vor.

Vorzugsweise erfolgt in Schritt (1) des erfindungsgemäßen Verfahrens eine vollständige Beschichtung des Substrats mit der erfindungsgemäßen wässrigen Beschichtungszusammensetzung (A) durch eine vollständige kataphoretische Abscheidung auf der gesamten Substratoberfläche.

Vorzugsweise wird in Schritt (1) des erfindungsgemäßen Verfahrens ein zumindest teilweise zu beschichtendes Substrat zumindest teilweise, vorzugsweise vollständig, in ein Tauchlackbad eingeführt und in diesem Tauchlackbad Schritt (1) durchgeführt.

In Schritt (1) des erfindungsgemäßen Verfahrens wird eine zumindest teilweise Beschichtung des Substrats durch eine zumindest teilweise kataphoretische Abscheidung der wässrigen Beschichtungszusammensetzung (A) erzielt. Die erfindungsgemäße wässrige Beschichtungszusammensetzung (A) wird dabei als Elektrotauchlack auf der Substratoberfläche abgeschieden.

Vorzugsweise wird die erfindungsgemäße wässrige Beschichtungszusammensetzung (A) mit einer elektrisch leitenden Anode und mit dem als Kathode geschalteten elektrisch leitfähigen Substrat in Berührung gebracht. Alternativ muss die wässrige Beschichtungszusammensetzung (A) nicht direkt mit einer elektrisch leitenden Anode in Berührung gebracht werden, beispielsweise wenn die Anode vom Tauchlackbad separiert vorliegt, beispielsweise über eine für Anionen permeable Anionenaustauscher-Membran.

Beim Durchgang von elektrischem Strom zwischen Anode und Kathode wird ein fest haftender Lackfilm auf der Kathode, d.h. auf dem Substrat abgeschieden.

Schritt (1) des erfindungsgemäßen Verfahrens wird vorzugsweise bei einer Tauchbadtemperatur in einem Bereich von 20 bis 45°C, noch bevorzugter in einem Bereich von 22 bis 42°C, besonders bevorzugt in einem Bereich von 24 bis 41°C, ganz besonders bevorzugt in einem Bereich von 26 bis 40°C, insbesondere bevorzugt in einem Bereich von 27 bis 39°C wie beispielsweise in einem Bereich von 28 bis 38°C durchgeführt. In einer anderen bevorzugten Ausführungsform des erfindungsgemäßen Verfahrens wird Schritt (1) bei einer Tauchbadtemperatur von höchstens 40°C, noch bevorzugter von höchstens 38°C, besonders bevorzugt von höchstens 35°C, ganz besonders bevorzugt von höchstens 34°C oder von höchstens 33°C oder von höchstens 32°C oder von höchstens 31°C oder von höchstens 30°C oder von höchstens 29°C oder von höchstens 28°C, durchgeführt. In einer weiteren anderen bevorzugten Ausführungsform des erfindungsgemäßen Verfahrens wird Schritt (1) bei einer Tauchbadtemperatur ≤ 32°C wie beispielsweise ≤ 31°C oder ≤ 30°C oder ≤ 29°C oder ≤ 28°C oder ≤ 27°C oder ≤ 26°C oder ≤ 25°C oder ≤ 24°C oder ≤ 23°C durchgeführt.

Vorzugsweise wird die erfindungsgemäße wässrige Beschichtungszusammensetzung (A) in Schritt (1) des erfindungsgemäßen Verfahrens so appliziert, dass die resultierende Elektrotauchlackschicht eine Trockenschichtdicke im Bereich von 5 bis 40 µm, besonders bevorzugt von 10 bis 30 µm, insbesondere bevorzugt von 20 bis 25 µm, aufweist.

### Stufen (1a) und (1b) innerhalb des Schritts (1)

Schritt (1) des erfindungsgemäßen Verfahrens wird in wenigstens zwei aufeinanderfolgenden Stufen (1a) und (1b) durchgeführt, nämlich
(1a) bei einer angelegten Spannung in einem Bereich von 1 bis 50 V, welche über eine Dauer von wenigstens 5 Sekunden angelegt wird, und
(1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung.

Die Stufen (1a) und (1b) innerhalb des Schritts (1) des erfindungsgemäßen Verfahrens werden vorzugsweise innerhalb einem eingesetzten Tauchlackbad enthaltend die Beschichtungszusammensetzung (A) durchgeführt.

### Stufe (1a)

Während der Durchführung von Stufe (1a) bildet sich eine entsprechende Bismutangereicherte Schicht als eine Vorabscheidungsschicht auf dem elektrisch leitfähigen Substrat, welche sich beispielsweise durch Röntgenfluoreszenzanalyse nachweisen und quantifizieren lässt. Das Bismut liegt dabei vorzugsweise in Form von metallischem Bismut(0) vor, kann aber alternativ oder zusätzlich auch in trivalenter Form und/oder in anderen Oxidationsstufen vorliegen. Diese Vorabscheidungsschicht ist insbesondere weitgehend frei von in der Beschichtungszusammensetzung enthaltenen Komponenten (A1) und gegebenenfalls (A2) und/oder (A5) und/oder (A6). Die so gebildete Bismutangereicherte Schicht übt vorzugsweise eine korrosionsschützende Wirkung aus, welche umso ausgeprägter ist, je größer die Bismut-Schichtauflage (in mg Bismut pro m² Oberfläche) ist. Bevorzugt werden Schichtauflagen von mindestens 10 oder mindestens 20 oder mindestens 30, besonders bevorzugt mindestens 40 oder mindestens 50 und insbesondere mindestens 100 oder mindestens 180 mg Bismut (als Metall gerechnet) pro m² Oberfläche.

Vorzugsweise wird Stufe (1a) bei einer angelegten Spannung in einem Bereich von 1 bis 45 V oder in einem Bereich von 1 bis 40 V oder in einem Bereich von 1 bis 35 V oder in einem Bereich von 1 bis 30 V oder in einem Bereich von 1 bis 25 V oder in einem Bereich von 1 bis 20 V oder in einem Bereich von 1 bis 15 V oder in einem Bereich von 1 bis 10 V oder in einem Bereich von 1 bis 5 V durchgeführt. In einer weiteren bevorzugten Ausführungsform wird Stufe (1a) bei einer angelegten Spannung in einem Bereich von 2 bis 45 V oder in einem Bereich von 2 bis 40 V oder in einem Bereich von 2 bis 35 V oder in einem Bereich von 2 bis 30 V oder in einem Bereich von 3 bis 25 V oder in einem Bereich von 3 bis 20 V oder in einem Bereich von 3 bis 15 V oder in einem Bereich von 3 bis 10 V oder in einem Bereich von 3 bis 6 V durchgeführt.

Die in Stufe (1a) angelegte Spannung wird über eine Dauer von wenigstens 5 Sekunden, vorzugsweise von wenigstens 10 oder wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. Die Dauer bezeichnet dabei jeweils das Zeitintervall, während dessen die entsprechende Spannung während der Durchführung von Stufe (1a) aufrechterhalten wird.

In einer bevorzugten Ausführungsform wird die in Stufe (1a) angelegte Spannung über eine Dauer in einem Bereich von wenigstens 5 bis 500 Sekunden oder von 5 bis 500 Sekunden oder von 10 bis 500 Sekunden oder von 10 bis 300 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Einstellung einer Spannung in einem Bereich von 1 bis 50 V, die während der Durchführung von Stufe (1a) über eine Dauer von wenigstens 10 Sekunden angelegt wird, kann galvanostatisch (konstant geregelter Strom) erfolgen. Alternativ kann diese Einstellung jedoch auch potentiostatisch (konstant geregelte Spannung) erfolgen, indem Stufe (1a) bei einem Abscheidungsstrom oder in einem Abscheidungsstrombereich durchgeführt wird, der einer entsprechenden Spannung in einem Bereich von 1 bis 50 V entspricht. Vorzugsweise liegt ein solcher Abscheidungsstrom in einem Bereich von 20 bis 400 mA, besonders bevorzugt in einem Bereich von 30 bis 300 mA oder in einem Bereich von 40 bis 250 mA oder in einem Bereich von 50 bis 220 mA, insbesondere in einem Bereich von 55 bis 200 mA. Vorzugsweise werden solche Abscheidungsstrome innerhalb der Stufe (1a) eingesetzt, wenn Substrate verwendet werden, welche eine Oberfläche im Bereich von 300 bis 500 cm², insbesondere von 350 bis 450 cm² oder 395 bis 405 cm² aufweisen.

Vorzugsweise beträgt die Abscheidungsstromdichte in Stufe (1a) mindestens 1 A/m², besonders bevorzugt mindestens 2 A/m² und insbesondere mindestens 3 A/m², vorzugsweise aber jeweils nicht mehr als 20 A/m², besonders bevorzugt jeweils nicht mehr als 10 A/m².

Vorzugsweise wird die Abscheidungsstromdichte oder der Abscheidungsstrom in Stufe (1a) dabei über eine Dauer von wenigstens 5 oder wenigstens 10 Sekunden, vorzugsweise von wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. In einer anderen bevorzugten Ausführungsform wird die in Stufe (1a) angelegte Abscheidungsstromdichte oder der Abscheidungsstrom über eine Dauer in einem Bereich von wenigstens 10 bis 500 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Spannung bzw. der Abscheidungsstrom oder die Abscheidungsstromdichte kann dabei während der genannten Dauer konstant gehalten werden. Die Spannung bzw. der Abscheidungsstrom oder die Abscheidungsstromdichte kann alternativ aber auch während der Abscheidungsdauer innerhalb von Stufe (1a) innerhalb der angegeben Minimum- und Maximalwerte im Bereich von 1 bis 50 V unterschiedliche Werte annehmen, beispielsweise hin und her pendeln oder rampen- oder stufenförmig von der Minimal- zur Maximalabscheidungsspannung ansteigen.

Die Einstellung der Spannung bzw. des Abscheidungsstroms oder der Abscheidungsstromdichte während der Durchführung von Stufe (1a) kann "plötzlich" erfolgen, also beispielsweise durch entsprechendes Umschalten an einem Gleichrichter, was eine gewisse technisch bedingte Mindestzeitdauer zum Erreichen der Sollspannung erfordert. Die Einstellung kann aber auch in Form einer Rampe erfolgen, also zumindest annähernd kontinuierlich und vorzugsweise linear über einen wählbaren Zeitraum, beispielsweise von bis zu 10, 20 30, 40, 50, 60, 120 oder 300 Sekunden. Bevorzugt ist eine Rampe von bis zu 120 Sekunden, besonders bevorzugt von bis zu 60 Sekunden. Auch eine stufenförmige Spannungserhöhung ist dabei möglich, wobei bei jeder Spannungsstufe vorzugsweise eine gewisse Haltezeit bei dieser Spannung eingehalten wird, beispielsweise 1, 5, 10 oder 20 Sekunden. Auch eine Kombination von Rampen und Stufen ist möglich.

Die Einstellung der Spannung bzw. des Abscheidungsstroms oder der Abscheidungsstromdichte in Stufe (1a) kann auch in Form von Pulsen geregelt werden, mit Zeiten ohne Strom bzw. mit einer Spannung unterhalb des Minimalwerts zwischen zwei Pulsen. Die Pulsdauer kann beispielsweise im Bereich von 0,1 bis 10 Sekunden liegen. Als "Zeitraum" für die Abscheidung wird dann vorzugsweise die Summe der Zeitdauern angesehen, bei denen die Abscheidungsspannung innerhalb der genannten Höchst- und Tiefstwerte bei der Durchführung von Schritt (1a) liegt. Rampen und Pulse können auch miteinander kombiniert werden.

Vorzugsweise wird das Komplexierungsmittel (A5) während der Durchführung von Stufe (1a) zumindest teilweise, insbesondere vollständig, wieder frei gesetzt, da die von (A5) komplexierte Komponente (A3) abgeschieden wird. Aufgrund der Anwesenheit der Komponente (A4) in der Beschichtungszusammensetzung (A) kann das frei gesetzte Komplexierungsmittel (A5) dazu genutzt werden, die Komponente (A4) zumindest teilweise in eine in (A) gelöste Form zu überführen, d.h. (A5) kann zur ständigen Generierung von (A3) eingesetzt werden, um die Gegenwart eines entsprechenden Reservoirs an (A3) zu gewährleisten.

### Stufe (1b)

Während der Durchführung von Stufe (1b) bildet sich auf der nach Stufe (1a) erhaltenen Vorabscheidungsschicht die eigentliche Tauchlackbeschichtung durch Abscheidung der Tauchlackkomponenten, insbesondere (A1) und gegebenenfalls (A2) und/oder (A5). Auch diese Beschichtung enthält Bismut, welches in trivalenter Form oder alternativ oder zusätzlich in anderen Oxidationsstufen vorliegen kann. Das Bismut kann dabei in einem nachfolgenden optionalen Härtungsschritt bzw. Vernetzungsschritt (6) des erfindungsgemäßen Verfahrens als Katalysator fungieren. Daher kann bei der Herstellung der Beschichtungszusammensetzung (A) vorzugsweise auf die Einarbeitung eines solchen Katalysators verzichtet werden.

Vorzugsweise wird Stufe (1b) bei einer angelegten Spannung in einem Bereich von 55 bis 400 V oder in einem Bereich von 75 bis 400 V oder in einem Bereich von 95 bis 400 V oder in einem Bereich von 115 bis 390 V oder in einem Bereich von 135 bis 370 V oder in einem Bereich von 155 bis 350 V oder in einem Bereich von 175 bis 330 V oder in einem Bereich von 195 bis 310 V oder in einem Bereich von 215 bis 290 V durchgeführt.

Vorzugsweise wird in Stufe (1b) in einem Zeitintervall im Bereich von 0 bis 300 Sekunden nach Beenden der Durchführung von Stufe (1a) eine Spannung im Bereich von 50 bis 400 V angelegt, vorzugsweise gegenüber einer inerten Gegenelektrode, jedoch unter der Bedingung, dass diese in Stufe (1b) angelegte Spannung um wenigstens 10 V größer ist als die zuvor in Stufe (1a) angelegte Spannung. Vorzugsweise wird diese Spannung innerhalb der Durchführung von Stufe (1b) für einen Zeitraum im Bereich von 10 bis 300 Sekunden, vorzugsweise im Bereich von 30 bis 240 Sekunden, bei wenigstens einem Wert innerhalb des genannten Spannungsbereichs von 50 bis 400 V unter der vorstehend genannten Bedingung gehalten.

Die in Stufe (1b) angelegte Spannung wird vorzugsweise über eine Dauer von wenigstens 10 Sekunden oder von wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. Die Dauer bezeichnet dabei jeweils das Zeitintervall, während dessen die entsprechende Spannung während der Durchführung von Stufe (1b) aufrechterhalten wird.

In einer bevorzugten Ausführungsform wird die in Stufe (1b) angelegte Spannung über eine Dauer in einem Bereich von wenigstens 10 bis 500 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Spannungserhöhung von Stufe (1a) zu Stufe (1b) kann "plötzlich" erfolgen, also beispielsweise durch entsprechendes Umschalten an einem Gleichrichter, was eine gewisse technisch bedingte Mindestzeitdauer zum Erreichen der Sollspannung erfordert. Die Spannungserhöhung kann aber auch in Form einer Rampe erfolgen, also zumindest annähernd kontinuierlich über einen wählbaren Zeitraum, beispielsweise von bis zu 10, 20 30, 40, 50, 60, 120 oder 300 Sekunden. Bevorzugt ist eine Rampe von bis zu 120 Sekunden, besonders bevorzugt von bis zu 60 Sekunden. Auch eine stufenförmige Spannungserhöhung ist möglich, wobei bei jeder Spannungsstufe vorzugsweise eine gewisse Haltezeit bei dieser Spannung eingehalten wird, beispielsweise 1, 5, 10 oder 20 Sekunden. Auch eine Kombination von Rampen und Stufen ist möglich.

Die Angabe eines Zeitraums wie beispielsweise eines Zeitraums im Bereich von 10 bis 300 Sekunden für das Anlegen der Spannung in Stufe (1b) in einem Bereich von 50 bis 400 V kann bedeuten, dass diese während des genannten Zeitraums konstant gehalten wird. Die Spannung kann alternativ aber auch während der Abscheidungsdauer innerhalb von Stufe (1b) innerhalb der angegeben Minimum- und Maximalwerte im Bereich von 50 bis 400 V unterschiedliche Werte annehmen, beispielsweise hin und her pendeln oder rampen- oder stufenförmig von der Minimalzur Maximalabscheidungsspannung ansteigen.

Die Spannung, d.h. Abscheidungsspannung, in Stufe (1b) kann auch in Form von Pulsen geregelt werden, mit Zeiten ohne Strom bzw. mit einer Abscheidungsspannung unterhalb des Minimalwerts zwischen zwei Pulsen. Die Pulsdauer kann beispielsweise im Bereich von 0,1 bis 10 Sekunden liegen. Als "Zeitraum" für die Abscheidung wird dann vorzugsweise die Summe der Zeitdauern angesehen, bei denen die Abscheidungsspannung innerhalb der genannten Höchst- und Tiefstwerte bei der Durchführung von Schritt (1b) liegt. Rampen und Pulse können auch miteinander kombiniert werden.

### Weitere optionale Verfahrensschritte

Gegebenenfalls umfasst das erfindungsgemäße Verfahren ferner einen Schritt (2), der vorzugsweise auf den Schritt (1) folgt, welcher wie vorstehend ausgeführt zwei Stufen (1a) und (1b) beinhaltet, nämlich
(2) ein Kontaktieren des mit der Beschichtungszusammensetzung (A) zumindest teilweise beschichteten Substrats mit einer wässrigen Sol-Gel-Zusammensetzung vor einer Aushärtung der abgeschiedenen Beschichtungszusammensetzung (A).

Dem Fachmann sind die Begriffe "Sol-Gel-Zusammensetzung", "Sol-Gel" sowie die Herstellung von Sol-Gel-Zusammensetzungen und Sol-Gelen bekannt, beispielsweise aus D. Wang et al., Progress in Organic Coatings 2009, 64, 327-338 oder S. Zheng et al., J. Sol-Gel. Sci. Technol. 2010, 54, 174-187.

Unter einer wässrigen "Sol-Gel-Zusammensetzung" im Sinne der vorliegenden Erfindung wird vorzugsweise eine wässrige Zusammensetzung verstanden, zu deren Herstellung wenigstens eine Ausgangsverbindung, welche wenigstens ein Metallatom und/oder Halbmetallatom wie beispielsweise M¹ und/oder M² und wenigstens zwei hydrolysierbare Gruppen wie beispielsweise zwei hydrolysierbare Gruppen X¹ aufweist, und welche gegebenenfalls ferner wenigstens einen nicht hydrolysierbaren organischen Rest wie beispielsweise R¹ aufweist, mit Wasser unter Hydrolyse und Kondensation umgesetzt wird. Die wenigstens zwei hydrolysierbaren Gruppen sind dabei vorzugsweise jeweils direkt an das in der wenigstens einen Ausgangsverbindung enthaltene wenigstens eine Metallatom und/oder wenigstens eine Halbmetallatom jeweils mittels einer Einfachbindung gebunden. Aufgrund der Gegenwart des nicht hydrolysierbaren organischen Restes wie beispielsweise R¹ kann eine solche erfindungsgemäß eingesetzte Sol-Gel-Zusammensetzung auch als "Sol-Gel-Hybrid-Zusammensetzung" bezeichnet werden.

Vorzugsweise ist die im optionalen Schritt (2) erfindungsgemäß eingesetzte wässrige Sol-Gel-Zusammensetzung erhältlich durch Umsetzung
wenigstens einer Verbindung Si(X¹)₃(R¹),
   wobei R¹ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,
   insbesondere wenigstens einer Verbindung Si(X¹)₃(R¹), wobei R¹ darin für einen nicht hydrolysierbaren organischen Rest steht, welcher wenigstens eine Epoxid-Gruppe als eine reaktive funktionelle Gruppe, aufweist, und worin X¹ für eine hydrolysierbare Gruppe wie beispielsweise eine O-C₁₋₆-Alkyl-Gruppe steht und zudem
   gegebenenfalls wenigstens einer weiteren Verbindung Si(X¹)₃(R¹), wobei R¹ darin für einen nicht hydrolysierbaren organischen Rest steht, welcher wenigstens eine reaktive funktionelle Gruppe ausgewählt aus der Gruppe bestehend aus primären Amino-Gruppen und sekundären Amino-Gruppen, und worin X¹ für eine hydrolysierbare Gruppe wie beispielsweise eine O-C₁₋₆-Alkyl-Gruppe steht, aufweist,
und gegebenenfalls wenigstens einer Verbindung Si(X¹)₄, worin X¹ für eine hydrolysierbare Gruppe wie beispielsweise eine O-C₁₋₆-Alkyl-Gruppe steht,
und gegebenenfalls wenigstens einer Verbindung Si(X¹)₃(R¹),
   wobei R¹ darin für einen nicht hydrolysierbaren organischen Rest steht, welcher keine reaktive funktionelle Gruppe aufweist wie beispielsweise einen C₁₋₁₀-Alkylrest, und worin X¹ für eine hydrolysierbare Gruppe wie beispielsweise einer O-C₁₋₆-Alkyl-Gruppe steht,
und gegebenenfalls wenigstens einer Verbindung Zr(X¹)₄, worin X¹ für eine hydrolysierbare Gruppe wie beispielsweise einer O-C₁₋₆-Alkyl-Gruppe steht,
mit Wasser.

Vorzugsweise umfasst das erfindungsgemäße Verfahren ferner einen Schritt (3), der vorzugsweise auf den Schritt (1) oder auf den Schritt (2) folgt, nämlich eine
(3) Spülung des nach Schritt (1) oder Schritt (2) erhältlichen mit der wässrigen Beschichtungszusammensetzung (A) zumindest teilweise beschichteten Substrats mit Wasser und/oder mit Ultrafiltrat.

Der Begriff "Ultrafiltrat" bzw. "Ultrafiltration" insbesondere im Zusammenhang mit der Elektrotauchlackierung ist dem Fachmann bekannt und beispielsweise definiert im Römpp Lexikon, Lacke und Druckfarben, Georg Thieme Verlag 1998.

Die Durchführung des Schritts (3) ermöglicht die Rückführung überschüssiger nach Schritt (1) auf dem zumindest teilweise beschichteten Substrat befindlicher Bestandteile der erfindungsgemäß eingesetzten wässrigen Beschichtungszusammensetzung (A) in das Tauchlackbad.

Das erfindungsgemäße Verfahren kann ferner einen optionalen Schritt (4), der vorzugsweise auf den Schritt (1) oder (2) oder (3) folgt, umfassen, nämlich einen Schritt (4)
(4) Kontaktieren des nach Schritt (1) oder Schritt (2) oder Schritt (3) erhältlichen mit der wässrigen Beschichtungszusammensetzung (A) zumindest teilweise beschichteten Substrats mit Wasser und/oder Ultrafiltrat, vorzugsweise über eine Dauer von 30 Sekunden bis zu einer Stunde, besonders bevorzugt über eine Dauer von 30 Sekunden bis zu 30 Minuten.

Das erfindungsgemäße Verfahren kann ferner einen optionalen Schritt (4a), der vorzugsweise auf den Schritt (1), insbesondere Stufe (1b), oder (2) oder (3) oder (4) folgt, umfassen, nämlich einen Schritt (4a),
(4a) Kontaktieren des nach Schritt (1) oder Schritt (2) oder Schritt (3) oder Schritt (4) erhältlichen mit der wässrigen Beschichtungszusammensetzung (A) zumindest teilweise beschichteten Substrats mit einer wässrigen Lösung oder Dispersion, vorzugsweise einer wässrigen Lösung, wenigstens eines Vernetzungskatalysators (V), vorzugsweise wenigstens eines Vernetzungskatalysators (V), der zur Vernetzung der reaktiven funktionellen Gruppen des Bindemittels (A1), insbesondere eines als Bindemittel (A1) eingesetzten Acrylat-basierten polymeren Harzes und/oder Epoxid-basierten polymeren Harzes geeignet ist.

Vorzugsweise ist die wässrige Lösung des wenigstens einen Vernetzungskatalysators (V) eine wässrige Lösung einer Bismut-Verbindung wie beispielsweise eine wässrige Lösung enthaltend eine trivalentes Bismut aufweisende Verbindung. Vorzugsweise wird an das eingesetzte elektrisch leitfähige Substrat während der Durchführung des optionalen Schritts (4a) eine kathodische Spannung gegenüber einer Anode angelegt, besonders bevorzugt in einem Bereich von 4 V bis 100 V. Die Durchführung des Schritts (4a) ermöglicht eine effiziente Vernetzung für den Fall, das eine zu geringe Menge der gegebenenfalls vorhandenen Komponente (A3) in der Beschichtungszusammensetzung nach Durchführung der Stufe (1a) des Schrittes (1) zurückbleibt, um in Stufe (1b) abgeschieden zu werden.

In einer bevorzugten Ausführungsform umfasst das erfindungsgemäße Verfahren ferner wenigstens einen Schritt (5), der vorzugsweise auf den Schritt (1) und/oder (2) und/oder (3) und/oder (4) und/oder (4a) folgt, aber vorzugsweise noch vor einem optionalen Schritt (6) durchgeführt wird, nämlich das
(5) Aufbringen wenigstens einer weiteren Lackschicht auf das nach Schritt (1) und/oder (2) und/oder (3) und/oder (4) und/oder (4a) erhältliche mit der erfindungsgemäß eingesetzten wässrigen Beschichtungszusammensetzung (A) zumindest teilweise beschichtete Substrat.

Mittels des Schrittes (5) können ein oder mehrere weitere Lackschichten auf das nach Schritt (1) und/oder (2) und/oder (3) und/oder (4) und/oder (4a) erhältliche und mit der Beschichtungszusammensetzung (A) zumindest teilweise beschichtete Substrat aufgebracht werden. Sollen mehrere Schichten aufgebracht werden, kann Schritt (5) entsprechend oft wiederholt werden. Beispiele weiterer aufzubringender Lackschichten sind beispielsweise Basislackschichten, Füllerschichten und/oder ein- oder mehrschichtige Decklackschichten. Dabei kann die gemäß Schritt (1) aufgebrachte wässrige Beschichtungszusammensetzung (A), gegebenenfalls nachdem sie einer Nachspülung mit einer wässrigen Sol-Gel-Zusammensetzung gemäß Schritt (2) und/oder einer optionalen Spülung mit Wasser und/oder Ultrafiltrat (gemäß Schritt (3)) unterworfen worden ist, und/oder nach Durchführung von Schritt (4) und/oder (4a) gehärtet werden, wobei diese Härtung wie nachfolgend beschrieben gemäß einem Schritt (6) erfolgt, bevor eine weitere Schicht wie eine Basislackschicht, Füllerschicht und/oder eine ein- oder mehrschichtige Decklackschicht aufgebracht wird. Alternativ kann aber die gemäß Schritt (1) aufgebrachte wässrige Beschichtungszusammensetzung (A), gegebenenfalls nachdem sie einer Nachspülung mit einer wässrigen Sol-Gel-Zusammensetzung gemäß Schritt (2) und/oder einer optionalen Spülung mit Wasser und/oder Ultrafiltrat (gemäß Schritt (3)) unterworfen worden ist und/oder nach Durchführung von Schritt (4) und/oder (4a), nicht gehärtet werden, sondern zunächst eine weitere Schicht wie eine Basislackschicht, Füllerschicht und/oder eine ein- oder mehrschichtige Decklackschicht aufgebracht werden ("Nass-in-Nass-Verfahren"). Nach Aufbringen dieser weiteren Schicht(en) wird in diesem Fall das so erhaltene Gesamtsystem gehärtet, wobei diese Härtung wie nachfolgend beschrieben vorzugsweise gemäß einem Schritt (6) erfolgen kann.

In einer bevorzugten Ausführungsform umfasst das erfindungsgemäße Verfahren ferner wenigstens einen Schritt (6), nämlich eine
(6) Aushärtung der nach Schritt (1) und/oder gegebenenfalls (2) und/oder (3) und/oder (4) und/oder (4a) zumindest teilweise auf dem Substrat aufgebrachten wässrigen Beschichtungszusammensetzung (A) oder der nach Schritt (1) und/oder gegebenenfalls (2) und/oder (3) und/oder (4) und/oder (4a) und/oder (5) zumindest teilweise auf dem Substrat aufgebrachten Beschichtung.

Schritt (6) des erfindungsgemäßen Verfahrens wird vorzugsweise mittels Einbrennen nach Schritt (1) oder gegebenenfalls (2) oder gegebenenfalls erst nach wenigstens einem weiteren Schritt (5) durchgeführt. Schritt (6) erfolgt vorzugsweise in einem Ofen. Die Aushärtung erfolgt dabei vorzugsweise bei einer Substrattemperatur im Bereich von 140°C bis 200°C, besonders bevorzugt in einem Bereich von 150°C bis 190°C, ganz besonders bevorzugt in einem Bereich von 160°C bis 180°C. Schritt (6) erfolgt vorzugsweise über eine Dauer von wenigstens 2 Minuten bis 2 Stunden, besonders bevorzugt über eine Dauer von wenigstens 5 Minuten bis 1 Stunde, ganz besonders bevorzugt über eine Dauer von wenigstens 10 Minuten bis 30 Minuten.

### Zumindest teilweise beschichtetes Substrat

Ein weiterer Gegenstand der vorliegenden Erfindung ist ein zumindest teilweise mit der erfindungsgemäßen wässrigen Beschichtungszusammensetzung (A) beschichtetes elektrisch leitfähiges Substrat.

Das zumindest teilweise beschichtete elektrisch leitfähige Substrat ist vorzugsweise ein Substrat aus Aluminium oder weist zumindest eine Oberfläche aus Aluminium auf.

Ein weiterer Gegenstand der vorliegenden Erfindung ist ein aus wenigstens einem solchen Substrat hergestellter vorzugsweise metallischer Gegenstand oder hergestelltes vorzugsweise metallisches Bauteil.

Solche Gegenstände können beispielsweise Metallbänder sein. Solche Bauteilen können zum Beispiel Karosserien und deren Teile von Automobilen wie Personenkraftwagen, Lastwagen, Motorrädern und Autobussen, und Bauteile von elektrischen Haushaltsprodukten oder auch Bauteilen aus dem Bereich der Geräteverkleidungen, Fassadenverkleidungen, Deckenverkleidungen oder Fensterprofilen sein.

### Bestimmungsmethoden

### 1. Filiformkorrosion gemäß DIN EN 3665

Die Bestimmung der Filiformkorrosion dient der Ermittlung der Korrosionsbeständigkeit einer Beschichtung auf einem Substrat. Diese Bestimmung wird gemäß DIN EN 3665 (Datum 1.8.1997) für das mit einer erfindungsgemäßen Beschichtungszusammensetzung oder mit einer Vergleichsbeschichtungszusammensetzung beschichtete elektrisch leitfähige Substrat Aluminium (ALU) über eine Dauer von 1008 h durchgeführt. Dabei wird die jeweilige Beschichtung, ausgehend von einer linienförmigen Verletzung der Beschichtung, in Form einer linien- oder fadenförmigen Unterkorrosion unterwandert. Die mittlere und maximale Fadenlänge in [mm] können dabei gemäß PAPP WT 3102 (Daimler) (Datum 21.12.2006) ausgemessen werden und sind ein Maß für die Beständigkeit der Beschichtung gegen Korrosion.

### 2. Röntgenfluoreszenzanalyse (RFA) zur Schichtgewichtsbestimmung

Das Schichtgewicht (in mg pro m² Oberfläche) der zu untersuchenden Beschichtung wird mittels wellenlängendispersiver Röntgenfluoreszenzanalyse (RFA) nach DIN 51001 (Datum: August 2003) ermittelt. Auf diese Weise kann beispielsweise der Bismut-Gehalt bzw. die Bismut-Schichtauflage einer Beschichtung wie beispielsweise der nach Stufe (1a) von Schritt (1) des erfindungsgemäßen Verfahrens erhaltenen Beschichtung ermittelt werden. Analog kann auch der jeweilige Gehalt an anderen Elementen wie beispielsweise Zirkonium bestimmt werden. Die bei der Durchführung der Röntgenfluoreszenzanalyse erhaltenen Signale werden um einen separat gemessen Untergrund einer unbeschichteten Referenzprobe korrigiert. Es werden Bruttozählraten (in kCounts pro Sekunde) jeweils der zu bestimmenden Elemente wie Bismut bestimmt. Von den so bestimmten jeweiligen Bruttozählraten der jeweiligen Probe werden die Bruttozählraten der jeweiligen Elemente einer Referenzprobe (unbeschichtetes Substrat) subtrahiert und so die Nettozählraten der zu bestimmenden Elemente erhalten. Diese werden mittels einer elementspezifischen Transferfunktion (erhalten aus einer Kalibriermessung) in Schichtgewichte (mg/cm²) umgerechnet. Werden mehrere Schichten aufgetragen, so wird nach jedem Auftrag das jeweilige Schichtgewicht bestimmt. Bei einer Folgeschicht zählt dann jeweils die Bruttozählrate der vorangegangenen Schicht als Referenz. Mittels dieser Bestimmungsmethode erfolgt die Bestimmung des Bismut-Gehalts der nach Stufe (1a) von Schritt (1) des erfindungsgemäßen Verfahrens erhaltenen Beschichtung.

### 3. Atomemissionsspektrometrie (ICP-OES) zur Bestimmung der Gesamtmenge des in der Beschichtungszusammensetzung (A) enthaltenen Bismut

Der Gehalt an bestimmten Elementen einer zu untersuchenden Probe wie beispielsweise der Gehalt an Bismut wird mittels induktiv-gekoppelter Plasma-Atom-Emissionspektrometrie (ICP-OES) gemäß DIN EN ISO 11885 (Datum: September 2009) ermittelt. Hierzu wird eine Probe der Beschichtungszusammensetzung (A) oder einer Vergleichszusammensetzung entnommen und ein Mikrowellenaufschluss dieser Probe durchgeführt: hierbei wird eine Probe der Beschichtungszusammensetzung (A) oder einer Vergleichszusammensetzung eingewogen und die flüchtigen Bestandteile dieser Probe durch Erhitzen bei einer linearen Temperaturerhöhung von 18°C auf 130°C innerhalb einer Stunde entfernt. Zu einer Menge von bis zu 0,5 g dieser so erhaltenen Probe wird eine 1:1-Mischung aus Salpetersäure (65%ig) und Schwefelsäure (96%ig) gegebenen (jeweils 5 mL von jeder der genannten Säuren) und dann ein Mikrowellenaufschluss mit einem Gerät der Firma Berghof (Gerät Speedwave IV) durchgeführt. Während des Aufschlusses wird die Probenmischung innerhalb von 20 bis 30 Minuten auf eine Temperatur von 250°C erhitzt und diese Temperatur für 10 Minuten gehalten. Nach dem Aufschluss soll die verbleibende Probenmischung eine klare Lösung ohne Festkörperanteil sein. Mittels ICP-OES gemäß DIN EN ISO 11885 wird dann der Gesamtgehalt an Bismut der Probe bestimmt. Diese wird in einem durch ein Hochfrequenzfeld erzeugtes Argonplasma thermisch angeregt und das aufgrund von Elektronenübergängen emittierte Licht als Spektrallinie der entsprechenden Wellenlänge sichtbar und mit einem optischen System analysiert. Dabei besteht eine lineare Beziehung zwischen der Intensität des emittierten Lichtes und der Konzentration des entsprechenden Elements wie Bismut. Vor Durchführung werden anhand von bekannten Elementstandards (Referenzstandards), die in Abhängigkeit von der jeweiligen zu untersuchenden Probe Kalibrierungsmessungen durchgeführt. Anhand dieser Kalibrierungen können Konzentrationen unbekannter Lösungen wie die Konzentration der Menge an Bismut in der Probe bestimmt werden.

Zur separaten Bestimmung des Anteils des in der jeweiligen Zusammensetzung gelöst vorliegenden Bismuts, d.h. beispielsweise der Menge an (A3), wird als Probe eine Probe des Ultrafiltrats eingesetzt. Die Ultrafiltration wird dabei für die Dauer von einer Stunde durchgeführt (Ultrafiltration im Kreislauf; Membran der Ultrafiltration: Nadir, PVDF, RM-UV 150T) und aus dem Permeat bzw. Ultrafiltrat eine Probe entnommen. Mittels ICP-OES gemäß DIN EN ISO 11885 wird dann der Gehalt an (A3) dieser Probe bestimmt. Dabei wird angenommen, dass die in (A) in gelöster Form vorliegende Komponente (A3) vollständig ins Ultrafiltrat übergeht. Wird von der zuvor bestimmten Gesamtmenge an Bismut der Anteil an (A3) subtrahiert, der wie vorstehend erläutert, ermittelt wird, so ergibt sich der Anteil an vorhandener Komponente (A4) in der untersuchten Probe.

Die nachfolgenden Beispiele dienen der Erläuterung der Erfindung, sind jedoch nicht einschränkend auszulegen.

Sofern nicht anders angeführt, handelt es sich bei den nachfolgenden Angaben in Prozenten jeweils um Gewichtsprozente.

### Beispiele und Vergleichsbeispiele

### 1. Herstellung von erfindungsgemäßen wässrigen Beschichtungszusammensetzungen und einer Vergleichsbeschichtungszusammensetzung V1

Die zur Herstellung der nachfolgenden beispielhaften erfindungsgemäßen Beschichtungszusammensetzungen Z1 und Z2 bzw. der Vergleichsbeschichtungszusammensetzung V1 eingesetzte Pigmentpasten CathoGuard® 520 der Firma BASF enthält Bismut-Subnitrat. Die Herstellung solcher Pigmentpasten ist dem Fachmann beispielsweise aus DE 10 2008 016 220 A1 bekannt (Seite 7, Tabelle 1, Variante B).

### Vergleichsbeschichtungszusammensetzung V1

Eine wässrige Dispersion eines Bindemittels und eines Vernetzungsmittels (kommerziell erhältliches Produkt CathoGuard® 520 der Firma BASF Coatings GmbH mit einem Festkörpergehalt von 37,5 Gew.-%) (2130 Teile) wird mit Anteilen an deionisiertem Wasser (2497 Teile) bei Raumtemperatur (18-23°C) zu einer Mischung M1 vermischt. Zu dieser Mischung M1 werden eine Pigmentpaste (kommerziell erhältliches Produkt CathoGuard® 520 der Firma BASF mit einem Festkörpergehalt von 65,0 Gew.-%) (306 Teile) und eine wasserlösliche Bismut(III)-haltige Verbindung (67 Teile) gegeben und die resultierende Mischung unter Rühren bei Raumtemperatur (18-23°C) unter Erhalt einer Mischung M2 vermischt. Nach weiterem Rühren über eine Dauer von 24 h bei Raumtemperatur (18-23°C) wird so die Vergleichsbeschichtungszusammensetzung (V1) erhalten. Als wasserlösliche Bismut(III)-haltige Verbindung wird Bismut-L-(+)-Lactat (Bi1) mit einem Bismut-Gehalt von 11,9 Gew.-% eingesetzt.

Die Herstellung von Bi1 erfolgt dabei wie nachstehend beschrieben: Eine Mischung aus L-(+)-Milchsäure (88 Gew.-%-ig) (613,64 g) und deionisiertem Wasser (1314,00 g) wird vorgelegt und auf 70°C unter Rühren erhitzt. 155,30 g Bismut(III)-oxid wird zu dieser Mischung hinzugegeben, wobei die Temperatur der resultierenden Mischung auf bis zu 80°C ansteigen kann. Nach einer Stunde werden weitere 155,30 g Bismut(III)-oxid zu dieser Mischung hinzugegeben, wobei die Temperatur der resultierenden Mischung wiederum auf bis zu 80°C ansteigen kann. Nach einer weiteren Stunde werden weitere 155,30 g Bismut(III)-oxid zu dieser Mischung hinzugegeben und die resultierende Mischung wird für 3 weitere Stunden gerührt. Dann erfolgt eine Zugabe von 1003 g deionisiertem Wasser unter Rühren. Gegebenenfalls wird die resultierende Mischung nach dieser Zeitdauer auf eine Temperatur im Bereich von 30 bis 40°C gekühlt, sofern diese Temperatur noch nicht erreicht sein sollte. Anschließend wird die Reaktionsmischung filtriert (T1000 Tiefenfilter) und das Filtrat als Bi1 eingesetzt. Teile bezeichnen hierbei jeweils Gewichts-Teile.

### Beschichtungszusammensetzung Z1

Die Herstellung der erfindungsgemäßen Beschichtungszusammensetzung Z1 erfolgt in Analogie zur Herstellung der Vergleichsbeschichtungszusammensetzung V1 mit dem Unterschied, dass vor dem weiterem Rühren über eine Dauer von 24 h bei Raumtemperatur (18-23°C) zur Mischung M2 zusätzlich 19,5 Teile einer phosphorhaltigen Verbindung, die mit einem Amin blockiert ist, (P1), gegeben werden. Teile bezeichnen hierbei jeweils Gewichts-Teile.

Die Herstellung von P1 erfolgt dabei, in dem 49,75 Teile Di-2-ethylhexylphopsphat (Säurezahl 187,15 mg KOH/g) zusammen mit 119,17 Teilen Butyldiglykol in einem Dreihalskolben, bestückt mit Rührer, Temperatursonde und Tropftrichter vorgelegt werden und die resultierende Mischung bei Raumtemperatur (18 bis 23°C) für die Dauer einer Stunde gerührt. Anschließend werden 58,69 Teile Tris(2-ethyhexyl)amin so zugetropft, dass die Temperatur der Mischung 60°C nicht überschreitet. Nach Abkühlen der Mischung auf Raumtemperatur (18 bis 23°C) wird für die Dauer einer weiteren Stunde gerührt und die resultierende Mischung als P1 eingesetzt.

### Beschichtungszusammensetzung Z2

Die Herstellung der erfindungsgemäßen Beschichtungszusammensetzung Z2 erfolgt in Analogie zur Herstellung der Vergleichsbeschichtungszusammensetzung V1 mit dem Unterschied, dass vor dem weiterem Rühren über eine Dauer von 24 h bei Raumtemperatur (18-23°C) zur Mischung M2 zusätzlich 29 Teile einer phosphorhaltigen Verbindung (P), die mit einem Amin blockiert ist (blockierte Verbindung P1), gegeben werden. Teile bezeichnen hierbei jeweils Gewichts-Teile.

Die Herstellung von P1 erfolgt wie im Zusammenhang mit der Beschichtungszusammensetzung Z1 beschrieben.

Tabelle 1 gibt einen Überblick über die so erhaltenen erfindungsgemäßen wässrigen Beschichtungszusammensetzungen Z1 und Z2 und über die wässrige Vergleichsbeschichtungszusammensetzung V1:

**Tabelle 1**

| **Beispiele Z1 und Z2 sowie Vergleichsbeispiel V1** | **Z1** | **Z2** | **V1** |
|---|---|---|---|
| CathoGuard® 520 / Gew.-% | 42,43 | 42,35 | 42,60 |
| Bi1 / Gew.-% | 1,33 | 1,33 | 1,34 |
| Deionisiertes Wasser / Gew.-% | 49,75 | 49,65 | 49,94 |
| Pigmentpaste CathoGuard® 520 / Gew.-% | 6,10 | 6,09 | 6,12 |
| P1 / Gew.-% | 0,39 | 0,58 | - |

### 2. Herstellung von beschichteten elektrisch leitfähigen Substraten mittels der erfindungsgemäßen wässrigen Beschichtungszusammensetzung Z1 oder Z2 oder der Vergleichsbeschichtungszusammensetzung V1

Die wässrige Beschichtungszusammensetzung Z1 oder Z2 bzw. die Vergleichsbeschichtungszusammensetzung V1 wird jeweils als Tauchlackbeschichtung auf ein Testblech als Substrat appliziert. Dabei wird jede der Zusammensetzungen Z1 und V1 nach ihrer vorstehend beschriebenen Herstellung auf das jeweilige Substrat appliziert.

Als Testblech (T1) wird Aluminium (ALU) als Beispiel eines elektrisch leitfähigen Substrates eingesetzt. Jede der zwei Seiten des jeweils eingesetzten Bleches weist eine Fläche von 10,5 cm ·19 cm auf, so dass sich eine Gesamtfläche von ca. 400 cm² ergibt.

Diese werden zunächst jeweils durch Eintauchen der Bleche in ein Bad enthaltend eine wässrige Lösung enthaltend die kommerziell erhältlichen Produkte Ridoline 1565-1 (3,0 Gew.-%) und Ridosol 1400-1 (0,3 % Gew.-%) der Firma Henkel sowie Wasser (96,7 Gew.-%) über eine Dauer von 1,5 bis 3 Minuten bei einer Temperatur von 62°C gereinigt. Danach wird eine mechanische Reinigung (mittels Pinseln) durchgeführt und die Bleche im Anschluss wiederum für eine Dauer von 1,5 Minuten erneut in das Bad eingetaucht.

Die auf diese Weise gereinigten Substrate werden im Anschluss mit Wasser (über eine Dauer von 1 Minute) und deionisiertem Wasser (über eine Dauer von 1 Minute) gespült.

Im direkten Anschluss wird auf jedes Blech T1 eine erfindungsgemäß eingesetzte wässrige Beschichtungszusammensetzung Z1 oder Z2 oder die Vergleichsbeschichtungszusammensetzung V1 appliziert, indem das jeweilige Blech jeweils in ein entsprechendes eine der Zusammensetzungen Z1 oder Z2 oder V1 enthaltenes Tauchlackbad getaucht wird. Dabei weist das Tauchlackbad jeweils eine Badtemperatur von 32°C auf.

Die Beschichtung im Tauchlackbad wird dabei mittels eines zweistufigen Abscheidungsschritts bzw. Beschichtungsschritts (1) durchgeführt, der zwei Stufen (1a) und (1b) vorsieht, bei welchem zunächst potentiostatisch eine Spannung von 4 V über eine Dauer von 120 Sekunden angelegt wird (entsprechend Stufe (1a)), wodurch ein Bismut-Vorabscheidung erzielt wird.

Im Anschluss daran wird für die nach Stufe (1a) erhaltenen Substrate Stufe (1b) des Schritts (1) des erfindungsgemäßen Verfahrens durchgeführt, wobei potentiostatisch eine Spannung von 4 V angelegt wird, welche kontinuierlich linear auf eine Spannung im Bereich von 160-200 V über eine Dauer von jeweils 30 Sekunden mittels einer Spannungsrampe erhöht wird. Diese jeweilige Spannung wird dann für eine Dauer im Bereich von 60 bis 180 Sekunden (Haltezeit) gehalten.

Im Einzelnen werden für eine Beschichtung des Substrats T1 mit einer der Zusammensetzungen V1 oder Z1 oder Z2 folgende Parameter gewählt:
*V1:*
   Stufe (1a): 4 V über 120 Sekunden (potentiostatisch)
   Stufe (1b): Spannungsrampe: lineare Erhöhung der Spannung auf 200 V über eine Dauer von 30 Sekunden und Haltezeit von 180 Sekunden bei dieser Spannung
*Z1:*
   Stufe (1a): 4 V über 120 Sekunden (potentiostatisch)
   Stufe (1b): Spannungsrampe: lineare Erhöhung der Spannung auf 160 V über eine Dauer von 30 Sekunden und Haltezeit von 60 Sekunden bei dieser Spannung
*Z2:*
   Stufe (1a): 4 V über 120 Sekunden (potentiostatisch)
   Stufe (1b): Spannungsrampe: lineare Erhöhung der Spannung auf 160 V über eine Dauer von 30 Sekunden und Haltezeit von 60 Sekunden bei dieser Spannung

Der nachfolgende Einbrennschritt erfolgt so, dass die erhaltenen Beschichtungen jeweils bei 175 °C (Ofentemperatur) über eine Dauer von 25 Minuten eingebrannt werden. Die Trockenschichtdicken der auf die jeweiligen Substrate eingebrannten erfindungsgemäßen wässrigen Beschichtungszusammensetzungen betragen jeweils 20 µm.

### 3. Untersuchung der Korrosionsschutzwirkung der beschichteten Substrate

Es werden die mit einer der Beschichtungszusammensetzungen V1, Z1 oder Z2 beschichteten Substrate T1 untersucht.

Alle nachstehenden Prüfungen wurden entsprechend der vorstehend angegebenen Bestimmungsmethoden und/oder der entsprechenden Norm durchgeführt. Jeder Wert in Tabelle 3 ist der Mittelwert (mit Standardabweichung) aus einer Zweifach- oder Dreifachbestimmung.

**Tabelle 3**

| | **Bei-spiel** | **Bei-spiel** | **Vergleichs-beispiel** |
|---|---|---|---|
| Substrat | T1 (ALU) | T1 (ALU) | T1 (ALU) |
| Beschichtungszusammensetzung | Z1 | Z2 | V1 |
| Maximale Fadenlänge [mm] gemäß PAPP WT 3102 (Daimler) nach Filiformkorrosion gemäß DIN EN 3365 nach 1008 h | **6,5** | **4,5** | 8,4 |
| Mittlere Fadenlänge [mm] gemäß PAPP WT 3102 (Daimler) nach Filiformkorrosion gemäß DIN EN 3365 nach 1008 h | **4,2** | **2,6** | 5,8 |

Wie aus der Tabelle 3 ersichtlich ist, zeichnen sich die mittels des erfindungsgemäßen Verfahrens mit einer erfindungsgemäßen wässrigen Beschichtungszusammensetzung beschichteten Substrate im Vergleich zu dem mit der Vergleichsbeschichtungszusammensetzung beschichtete Substrat durchweg durch eine verbesserte Korrosionsschutzwirkung aus.

## Patentansprüche

1. Eine wässrige Beschichtungszusammensetzung (A) umfassend
(A1) wenigstens ein kathodisch abscheidbares Bindemittel und
(A2) gegebenenfalls wenigstens ein Vernetzungsmittel,
zur zumindest teilweisen Beschichtung eines elektrisch leitfähigen Substrats mit einem Elektrotauchlack, **dadurch gekennzeichnet, dass**
die Beschichtungszusammensetzung (A) eine Gesamtmenge von wenigstens 30 ppm Bismut, bezogen auf das Gesamtgewicht der Beschichtungszusammensetzung (A), enthält, und dass
die Beschichtungszusammensetzung (A) wenigstens eine phosphorhaltige Verbindung (P) enthält, welche mit wenigstens einem Amin der allgemeinen Formel (I) blockiert ist, 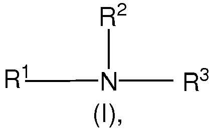 in der
R¹ und R² jeweils unabhängig voneinander für einen C₁₋₁₈-aliphatischen Rest, für einen C₃₋₁₂-cycloaliphatischen Rest, für einen über eine C₁₋₁₀-aliphatische Gruppe verbrückten C₃₋₁₂-cycloaliphatischen Rest oder für einen über eine C₁₋₁₀-aliphatische Gruppe verbrückten Aryl- oder Heteroaryl-Rest stehen, und
R³ für H, einen C₁₋₁₈-aliphatischen Rest, einen C₃₋₁₂-cycloaliphatischen Rest, einen über eine C₁₋₁₀-aliphatische Gruppe verbrückten C₃₋₁₂-cycloaliphatischen Rest oder für einen über eine C₁₋₁₀-aliphatische Gruppe verbrückten Aryl- oder Heteroaryl-Rest steht.

2. Die Beschichtungszusammensetzung (A) gemäß Anspruch 1, **dadurch gekennzeichnet, dass** sie die wenigstens eine mit wenigstens einem Amin der allgemeinen Formel (I) blockierte phosphorhaltige Verbindung (P) in einer Menge von 0,05 bis 5 Gew.-%, bezogen auf das Gesamtgewicht der Beschichtungszusammensetzung (A), enthält.

3. Die Beschichtungszusammensetzung (A) gemäß Anspruch 1 oder 2, **dadurch gekennzeichnet, dass** wenigstens einer der Reste R¹, R² und R³ für einen C₁₋₁₈-aliphatischen Rest steht.

4. Die Beschichtungszusammensetzung (A) gemäß einem der vorstehenden Ansprüche, **dadurch gekennzeichnet, dass** wenigstens einer der Reste R¹, R² und R³ für einen C₃₋₁₈-Alkyl-Rest steht.

5. Die Beschichtungszusammensetzung (A) gemäß einem der vorstehenden Ansprüche, **dadurch gekennzeichnet, dass** die phosphorhaltige Verbindung (P) ausgewählt ist aus der Gruppe bestehend aus Phosphonsäurediestern, Diphosphonsäurediestern, Phosphorsäuremonoestern und Phosphorsäure-diestern, deren Anionen sowie Mischungen davon.

6. Die Beschichtungszusammensetzung (A) gemäß einem der vorstehenden Ansprüche, **dadurch gekennzeichnet, dass** die phosphorhaltige Verbindung (P) eine Verbindung der nachstehenden allgemeinen Formel (II) oder ein Anion davon ist 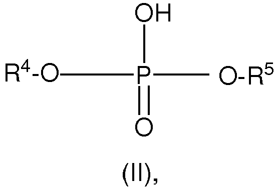 in der
R⁴ und R⁵ jeweils unabhängig voneinander ausgewählt sind aus der Gruppe bestehend aus
unsubstituierten (Hetero)Alkyl-Resten mit 1 bis 20 Kohlenstoffatomen und gegebenenfalls 1 bis 4 Heteroatomen ausgewählt aus der Gruppe bestehend aus N, NH, N(C₁₋₆-Alkyl), O und S, unsubstituierten (Hetero)Cycloalkyl-Resten mit 3 bis 20 Kohlenstoffatomen und gegebenenfalls 1 bis 4 Heteroatomen ausgewählt aus der Gruppe bestehend aus N, NH, N(C₁₋₆-Alkyl), O und S, und unsubstituierten (Hetero)Aryl-Resten mit 5 bis 20 Kohlenstoffatomen und gegebenenfalls 1 bis 4 Heteroatomen ausgewählt aus der Gruppe bestehend aus N, NH, N(C₁₋₆-Alkyl), O und S,
und einer der Reste R⁴ und R⁵ oder beide Reste R⁴ und R⁵ zusätzlich auch Wasserstoff darstellen kann/können.

7. Die Beschichtungszusammensetzung (A) gemäß einem der vorstehenden Ansprüche, **dadurch gekennzeichnet, dass** das in der Beschichtungszusammensetzung (A) enthaltene Bismut in einer in der Beschichtungszusammensetzung (A) gelöst (A3) und/oder ungelöst (A4) vorliegenden Form vorliegt.

8. Die Beschichtungszusammensetzung (A) gemäß einem der vorstehenden Ansprüche, **dadurch gekennzeichnet, dass** zumindest ein Teil der Gesamtmenge des in der Beschichtungszusammensetzung (A) enthaltenen Bismuts in einer in der Beschichtungszusammensetzung (A) gelöst vorliegenden Form (A3) vorliegt.

9. Die Beschichtungszusammensetzung (A) gemäß einem der vorstehenden Ansprüche, **dadurch gekennzeichnet, dass** die Beschichtungs-zusammensetzung (A) eine Gesamtmenge von wenigstens 130 ppm an Bismut enthält, bezogen auf das Gesamtgewicht der Beschichtungszusammensetzung (A), wobei davon
(A3) wenigstens 100 ppm Bismut, gegebenenfalls wenigstens 130 ppm Bismut, bezogen auf das Gesamtgewicht der Beschichtungszusammensetzung (A), in einer in der Beschichtungszusammensetzung (A) gelöst vorliegenden Form vorhanden sind
oder
(A3) wenigstens 30 ppm Bismut, bezogen auf das Gesamtgewicht der Beschichtungszusammensetzung (A), in einer in der Beschichtungszusammensetzung (A) gelöst vorliegenden Form vorhanden sind und
(A4) wenigstens 100 ppm Bismut, bezogen auf das Gesamtgewicht der Beschichtungszusammensetzung (A), in einer in der Beschichtungszusammensetzung (A) ungelöst vorliegenden Form vorhanden sind.

10. Die Beschichtungszusammensetzung (A) gemäß einem der vorstehenden Ansprüche, **dadurch gekennzeichnet, dass** das Bindemittel (A1) ein polymeres Harz ist, welches zumindest teilweise protonierte tertiäre Amino-Gruppen aufweist, und das gegebenenfalls vorhandene Vernetzungsmittel (A2) ein blockiertes Isocyanat ist.

11. Eine Verwendung der Beschichtungszusammensetzung (A) gemäß einem der Ansprüche 1 bis 10 zur zumindest teilweisen Beschichtung eines elektrisch leitfähigen Substrats mit einem Elektrotauchlack.

12. Ein Verfahren zur zumindest teilweisen Beschichtung eines elektrisch leitfähigen Substrats mit einem Elektrotauchlack umfassend wenigstens einen Schritt (1),
(1) Kontaktieren des als Kathode geschalteten elektrisch leitfähigen Substrats mit der wässrigen Beschichtungszusammensetzung (A) gemäß einem der Ansprüche 1 bis 10.

13. Das Verfahren gemäß Anspruch 12, **dadurch gekennzeichnet, dass** Schritt (1) in wenigstens zwei aufeinanderfolgenden Stufen (1a) und (1b) durchgeführt wird, nämlich
(1a) bei einer angelegten Spannung in einem Bereich von 1 bis 50 V, welche über eine Dauer von wenigstens 5 Sekunden angelegt wird, und
(1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung.

14. Ein zumindest teilweise mit der wässrigen Beschichtungszusammensetzung (A) gemäß einem der Ansprüche 1 bis 10 beschichtetes elektrisch leitfähiges Substrat.

15. Das zumindest teilweise beschichtete elektrisch leitfähige Substrat gemäß Anspruch 14, **dadurch gekennzeichnet, dass** das Substrat zumindest eine Oberfläche aus Aluminium aufweist.

## Claims

1. An aqueous coating composition (A) comprising
(A1) at least one cathodically depositable binder and
(A2) optionally at least one crosslinking agent,
for at least partly coating an electrically conductive substrate with an electrocoat material,
**characterized in that**
the coating composition (A) comprises a total amount of at least 30 ppm of bismuth, based on the total weight of the coating composition (A), and **in that**
the coating composition (A) comprises at least one phosphorus-containing compound (P) blocked with at least one amine of the general formula (I), 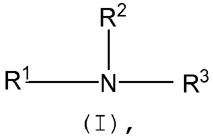 in which
R¹ and R² each independently of one another are a C₁₋₁₈ aliphatic radical, are a C₃₋₁₂ cycloaliphatic radical, are a C₃₋₁₂ cycloaliphatic radical bridged via a C₁₋₁₀ aliphatic group, or are an aryl or heteroaryl radical bridged via a C₁₋₁₀ aliphatic group, and
R³ is H, a C₁₋₁₈ aliphatic radical, a C₃₋₁₂ cycloaliphatic radical, a C₃₋₁₂ cycloaliphatic radical bridged via a C₁₋₁₀ aliphatic group, or an aryl or heteroaryl radical bridged via a C₁₋₁₀ aliphatic group.

2. The coating composition (A) according to Claim 1, **characterized in that** it comprises at least one phosphorus-containing compound (P), blocked with at least one amine of the general formula (I), in an amount of 0.05 to 5 wt%, based on the total weight of the coating composition (A).

3. The coating composition (A) according to Claim 1 or 2, **characterized in that** at least one of the radicals R¹, R², and R³ is a C₁₋₁₈ aliphatic radical.

4. The coating composition (A) according to any of the preceding claims, **characterized in that** at least one of the radicals R¹, R², and R³ is a C₃₋₁₈ alkyl radical.

5. The coating composition (A) according to any of the preceding claims, **characterized in that** the phosphorus-containing compound (P) is selected from the group consisting of phosphonic diesters, diphosphonic diesters, phosphoric monoesters, and phosphoric diesters, their anions, and the mixtures thereof.

6. The coating composition (A) according to any of the preceding claims, **characterized in that** the phosphorus-containing compound (P) is a compound of the general formula (II) below or an anion thereof 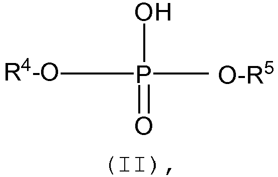 in which
R⁴ and R⁵ each independently of one another are selected from the group consisting of
unsubstituted (hetero)alkyl radicals having 1 to 20 carbon atoms and optionally 1 to 4 heteroatoms selected from the group consisting of N, NH, N(C₁₋₆ alkyl), O, and S, unsubstituted (hetero)cycloalkyl radicals having 3 to 20 carbon atoms and optionally 1 to 4 heteroatoms selected from the group consisting of N, NH, N(C₁₋₆ alkyl), O, and S, and unsubstituted (hetero)aryl radicals having 5 to 20 carbon atoms and optionally 1 to 4 heteroatoms selected from the group consisting of N, NH, N(C₁₋₆ alkyl), O, and S,
and one of the radicals R⁴ and R⁵, or both radicals R⁴ and R⁵, may additionally also be hydrogen.

7. The coating composition (A) according to any of the preceding claims, **characterized in that** the bismuth present in the coating composition (A) is present in a form in which it is in solution (A3) and/or not in solution (A4) in the coating composition (A).

8. The coating composition (A) according to any of the preceding claims, **characterized in that** at least part of the total amount of bismuth present in the coating composition (A) is present in a form (A3) in which it is in solution in the coating composition (A).

9. The coating composition (A) according to any of the preceding claims, **characterized in that** the coating composition (A) comprises a total amount of at least 130 ppm of bismuth, based on the total weight of the coating composition (A), including
(A3) at least 100 ppm of bismuth, optionally at least 130 ppm of bismuth, based on the total weight of the coating composition (A), in a form in which it is in solution in the coating composition (A),
or
(A3) at least 30 ppm of bismuth, based on the total weight of the coating composition (A), in a form in which it is in solution in the coating composition (A), and
(A4) at least 100 ppm of bismuth, based on the total weight of the coating composition (A), in a form in which it is not in solution in the coating composition (A).

10. The coating composition (A) according to any of the preceding claims, **characterized in that** the binder (A1) is a polymeric resin which has at least partly protonated tertiary amino groups, and the crosslinking agent (A2) present optionally is a blocked isocyanate.

11. A use of the coating composition (A) according to any of Claims 1 to 10 for at least partly coating an electrically conductive substrate with an electrocoat material.

12. A method for at least partly coating an electrically conductive substrate with an electrocoat material, comprising at least a step (1) :
(1) contacting the electrically conductive substrate, connected as cathode, with the aqueous coating composition (A) according to any of Claims 1 to 10.

13. The method according to Claim 12, **characterized in that** step (1) is carried out in at least two successive stages (1a) and (1b):
(1a) at an applied voltage in a range from 1 to 50 V, which is applied over a duration of at least 5 seconds, and
(1b) at an applied voltage in a range from 50 to 400 V, with the proviso that the voltage applied in stage (1b) is greater by at least 10 V than the voltage applied in stage (1a).

14. An electrically conductive substrate coated at least partly with the aqueous coating composition (A) according to any of Claims 1 to 10.

15. The at least partly coated electrically conductive substrate according to Claim 14, **characterized in that** the substrate has at least one surface of aluminum.

## Revendications

1. Composition aqueuse de revêtement (A), comprenant
(A1) au moins un liant déposable cathodiquement et
(A2) éventuellement au moins un agent de réticulation, pour le revêtement au moins partiel d'un substrat électriquement conducteur avec une peinture pour dépôt électrolytique, **caractérisée en ce que**
la composition de revêtement (A) contient une quantité totale d'au moins 30 ppm de bismuth, par rapport au poids total de la composition de revêtement (A), et **en ce que** la composition de revêtement (A) contient au moins un composé contenant du phosphore (P), qui est bloqué avec au moins une amine de formule générale (I), dans laquelle 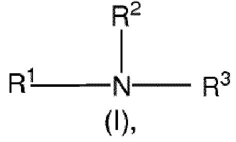
R¹ et R² représentent chacun indépendamment l'un de l'autre un radical aliphatique en C₁₋₁₈, un radical cycloaliphatique en C₃₋₁₂, un radical cycloaliphatique en C3-12 relié par un groupe aliphatique en C₁₋₁₀, ou un radical aryle ou hétéroaryle relié par un groupe aliphatique en C₁₋₁₀, et
R³ représente H, un radical aliphatique en C₁₋₁₈, un radical cycloaliphatique en C₃₋₁₂, un radical cycloaliphatique en C₃₋₁₂ relié par un groupe aliphatique en C₁₋₁₀, ou un radical aryle ou hétéroaryle relié par un groupe aliphatique en C₁₋₁₀.

2. Composition de revêtement (A) selon la revendication 1, **caractérisée en ce qu'**elle contient ledit au moins un composé contenant du phosphore (P) bloqué avec au moins une amine de formule générale (I) en une quantité de 0,05 à 5 % en poids, par rapport au poids total de la composition de revêtement (A).

3. Composition de revêtement (A) selon la revendication 1 ou 2, **caractérisée en ce qu'**au moins un des radicaux R¹, R² et R³ représente un radical aliphatique en C₁₋₁₈.

4. Composition de revêtement (A) selon l'une quelconque des revendications précédentes, **caractérisée en ce qu'**au moins un des radicaux R¹, R² et R³ représente un radical alkyle en C₃₋₁₈.

5. Composition de revêtement (A) selon l'une quelconque des revendications précédentes, **caractérisée en ce que** le composé contenant du phosphore (P) est choisi dans le groupe constitué par les diesters de l'acide phosphonique, les diesters de l'acide diphosphonique, les monoesters de l'acide phosphorique et les diesters de l'acide phosphorique, leurs anions et leurs mélanges.

6. Composition de revêtement (A) selon l'une quelconque des revendications précédentes, **caractérisée en ce que** le composé contenant du phosphore (P) est un composé de la formule générale (II) ci-après ou un anion de celui-ci, 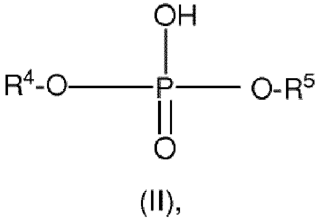 dans laquelle
R⁴ et R⁵ sont chacun indépendamment l'un de l'autre choisis dans le groupe constitué par :
les radicaux (hétéro)alkyle non substitués contenant 1 à 20 atomes de carbone et éventuellement 1 à 4 hétéroatomes choisis dans le groupe constitué par N, NH, N(alkyle en C₁₋₆), O et S, les radicaux (hétéro)cycloalkyle non substitués contenant 3 à 20 atomes de carbone et éventuellement 1 à 4 hétéroatomes choisis dans le groupe constitué par N, NH, N(alkyle en C₁₋₆), O et S, et les radicaux (hétéro)aryle non substitués contenant 5 à 20 atomes de carbone et éventuellement 1 à 4 hétéroatomes choisis dans le groupe constitué par N, NH, N(alkyle en C₁₋₆), O et S,
et un des radicaux R⁴ et R⁵ ou les deux radicaux R⁴ et R⁵ peuvent en outre également représenter l'hydrogène.

7. Composition de revêtement (A) selon l'une quelconque des revendications précédentes, **caractérisée en ce que** le bismuth contenu dans la composition de revêtement (A) se présente sous une forme dissoute (A3) et/ou non dissoute (A4) dans la composition de revêtement (A).

8. Composition de revêtement (A) selon l'une quelconque des revendications précédentes, **caractérisée en ce qu'**au moins une partie de la quantité totale du bismuth contenu dans la composition de revêtement (A) se présente sous une forme dissoute (A3) dans la composition de revêtement (A).

9. Composition de revêtement (A) selon l'une quelconque des revendications précédentes, **caractérisée en ce que** la composition de revêtement (A) contient une quantité totale d'au moins 130 ppm de bismuth, par rapport au poids total de la composition de revêtement (A), parmi lequel
(A3) au moins 100 ppm de bismuth, éventuellement au moins 130 ppm de bismuth, par rapport au poids total de la composition de revêtement (A), est présent sous une forme dissoute dans la composition de revêtement (A),
ou
(A3) au moins 30 ppm de bismuth, par rapport au poids total de la composition de revêtement (A), est présent sous une forme dissoute dans la composition de revêtement (A), et
(A4) au moins 100 ppm de bismuth, par rapport au poids total de la composition de revêtement (A), est présent sous une forme non dissoute dans la composition de revêtement (A).

10. Composition de revêtement (A) selon l'une quelconque des revendications précédentes, **caractérisée en ce que** le liant (A1) est une résine polymère qui comprend des groupes amino tertiaires au moins partiellement protonés, et l'agent de réticulation (A2) éventuellement présent est un isocyanate bloqué.

11. Utilisation de la composition de revêtement (A) selon l'une quelconque des revendications 1 à 10 pour le revêtement au moins partiel d'un substrat électriquement conducteur avec une peinture pour dépôt électrolytique.

12. Procédé de revêtement au moins partiel d'un substrat électriquement conducteur avec une peinture pour dépôt électrolytique comprenant au moins une étape (1) :
(1) la mise en contact du substrat électriquement conducteur raccordé en tant que cathode avec la composition de revêtement aqueuse (A) selon l'une quelconque des revendications 1 à 10.

13. Procédé selon la revendication 12, **caractérisé en ce que** l'étape (1) est réalisée en au moins deux étapes (1a) et (1b) successives, à savoir :
(1a) à une tension appliquée dans une plage allant de 1 à 50 V, qui est appliquée pendant une durée d'au moins 5 secondes, et
(1b) à une tension appliquée dans une plage allant de 50 à 400 V, à condition que la tension appliquée à l'étape (1b) soit au moins 10 V supérieure à la tension appliquée à l'étape (la).

14. Substrat électriquement conducteur au moins partiellement revêtu avec la composition de revêtement aqueuse (A) selon l'une quelconque des revendications 1 à 10.

15. Substrat électriquement conducteur au moins partiellement revêtu selon la revendication 14, **caractérisé en ce que** le substrat comprend au moins une surface en aluminium.
